# EUROPEAN PATENT APPLICATION

(11) **EP 4 723 109 A1**
(43) Date of publication of application: **08.04.2026**
(21) Application number: 24815361.1
(22) Date of filing: 23.05.2024
(51) Int. Cl.: G10L 21/007, G10L 25/30, G10L 25/90

(54) **SPEAKER ANONYMIZATION DEVICE, SPEAKER ANONYMIZATION METHOD, SPEAKER ANONYMIZATION PROGRAM, LEARNING DEVICE, LEARNING METHOD, AND LEARNING PROGRAM**

(30) Priority: 29.05.2023 JP 2023088164
(71) Applicant: Inter-University Research Institute Corporation Research Organization of Information and Systems, Tachikawa-shi, Tokyo 190-0014 (JP)
(72) Inventor: MIAO, Xiaoxiao, Tokyo 101-8430 (JP); WANG, Xin, Tokyo 101-8430 (JP); COOPER, Erica, Tokyo 101-8430 (JP); YAMAGISHI, Junichi, Tokyo 101-8430 (JP)
(74) Representative: Richardt Patentanwälte PartG mbB
(86) International application number: PCT/JP2024/018985
(87) International publication number: WO 2024/247877

(57) **Abstract**

Provided is a speaker anonymization technology of improving robustness against re-identification attacks while maintaining convenience of speech data. A speaker anonymization device configured to generate anonymized speech data includes a generation unit configured to generate a speaker-anonymized vector by inputting a speaker vector extracted from speech data to be anonymized into a trained neural network configured to perform Householder transformation and trained using a predetermined loss function.

## Description

### TECHNICAL FIELD

The present disclosure relates to a speaker anonymization device, a speaker anonymization method, a speaker anonymization program, a training device, a training method, and a training program.

### BACKGROUND ART

As a "speaker anonymization" technology of processing speech data such that speakers' personal information (e.g. names) is not identified from the speech data, for example, a technology of performing signal processing on speech data and randomly converting spectrum envelopes and formants, is known.

However, the above technology has a possibility to impair convenience of the speech data, and has an issue of weakness against re-identification attacks. Note that impairment in convenience of the speech data refers to recognition accuracy and analysis accuracy in a case of performing various types of processing, such as recognition processing, emotion analysis processing, and the like, on the speech data converted through a speaker anonymization technology being lower than recognition accuracy and analysis accuracy for the original speech data. Also, the re-identification attack refers to an action of a third party to attempt to identify a speaker, who does not wish the speaker to be identified from his/her speech data, based on speech data of that speaker open to the public.

### CITATION LIST

### PATENT LITERATURE

Patent Literature 1: Japanese Laid-Open Patent Publication No. 2004-266746

### SUMMARY OF THE INVENTION

### PROBLEM TO BE SOLVED BY THE INVENTION

The applicant of the present application focuses on a method for generating anonymized speech data by decomposing speech data into a pitch (fundamental frequency), utterance content, and a speaker vector, and performing speaker anonymization processing on the speaker vector, thereby attempting to address the above issue using this method.

The present disclosure provides a speaker anonymization technology of improving robustness against re-identification attacks while maintaining convenience of speech data.

### MEANS FOR SOLVING THE PROBLEM

A speaker anonymization device configured to generate anonymized speech data includes a generation unit configured to generate a speaker-anonymized vector by inputting a speaker vector extracted from speech data to be anonymized into a trained neural network configured to perform Householder transformation and trained using a predetermined loss function.

### ADVANTAGEOUS EFFECTS OF THE INVENTION

According to the present disclosure, it is possible to provide a speaker anonymization technology of improving robustness against re-identification attacks while maintaining convenience of speech data.

### BRIEF DESCRIPTION OF THE DRAWINGS

[FIG. 1] FIG. 1 is a diagram illustrating an application example of a speaker anonymization technology.
[FIG. 2] FIG. 2 is a diagram illustrating an example of a hardware configuration of a server device.
[FIG. 3] FIG. 3 is a diagram for describing an outline of the speaker anonymization technology.
[FIG. 4] FIG. 4 is a diagram illustrating an example of a functional configuration of the server device.
[FIG. 5] FIG. 5 is a diagram illustrating details of a functional configuration of a training unit.
[FIG. 6] FIG. 6 is a diagram illustrating a specific example of processing performed by an NN unit.
[FIG. 7] FIG. 7 is a diagram illustrating a specific example of processing performed by a loss function calculation unit.
[FIG. 8] FIG. 8 is a diagram illustrating a relationship between a speaker vector and a speaker-anonymized vector.
[FIG. 9] FIG. 9 is an example of a flowchart illustrating a training process performed by the training unit.
[FIG. 10] FIG. 10 is a diagram illustrating details of functional configurations of a generation unit and a providing unit.
[FIG. 11] FIG. 11 is a flowchart illustrating a generation process performed by the generation unit.
[FIG. 12] FIG. 12 is a flowchart illustrating a providing process performed by the providing unit.
[FIG. 13] FIG. 13 is a diagram illustrating an example of a hardware configuration of a terminal.
[FIG. 14] FIG. 14 is a diagram illustrating an example of a functional configuration of the terminal.
[FIG. 15] FIG. 15 is a flowchart illustrating an example of an anonymized speech data generation process performed by an anonymized speech data generation unit.
[FIG. 16] FIG. 16 is a graph illustrating characteristics of anonymized speech data.
[FIG. 17] FIG. 17 is a graph illustrating an outline of evaluation indices of the anonymized speech data.
[FIG. 18] FIG. 18 is a diagram illustrating a method of a verification experiment of robustness of the anonymized speech data against re-identification attacks.
[FIG. 19] FIG. 19 is tables illustrating results of the verification experiment of the robustness of the anonymized speech data against the re-identification attacks.
[FIG. 20] FIG. 20 is a diagram illustrating a method of a verification experiment of convenience of the anonymized speech data.
[FIG. 21] FIG. 21 is a table illustrating results of the verification experiment of the convenience of the anonymized speech data.

### DESCRIPTION OF THE EMBODIMENTS

Hereinafter, embodiments will be described with reference to the accompanying drawings. In the present specification and drawings, components having substantially the same functional configuration are denoted by the same reference signs, and redundant description thereof will be omitted.

### [First Embodiment]

### <Application Example of Speaker Anonymization Technology>

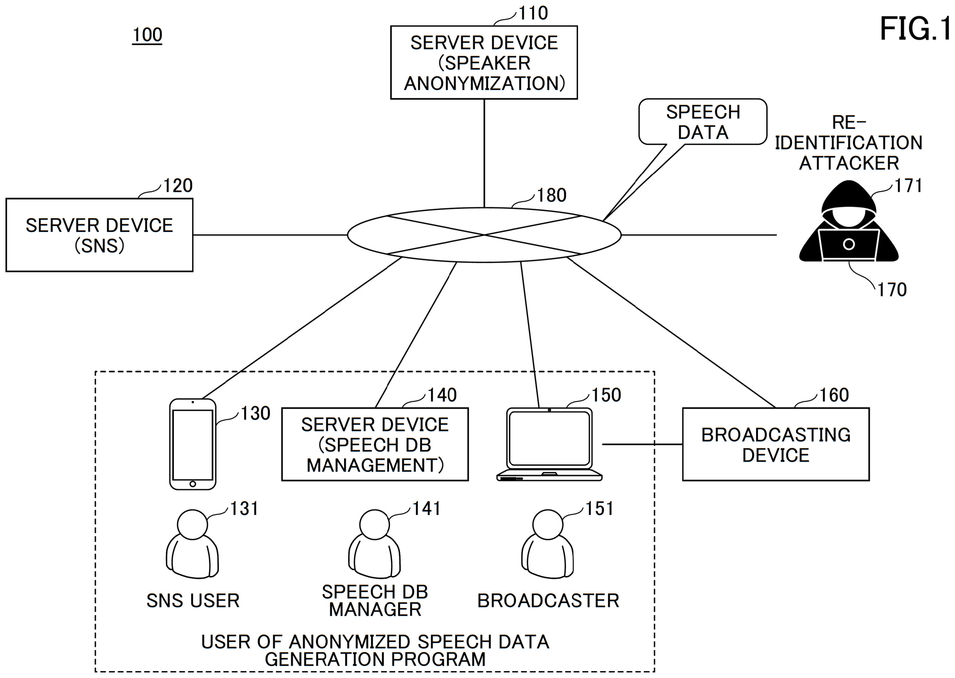

First, an application example of a speaker anonymization technology will be described. FIG. 1 is a diagram illustrating the application example of the speaker anonymization technology. In the first embodiment, a network system 100 is an example of a system to which the speaker anonymization technology is applied. The network system 100 includes a server device 110. In the first embodiment, the speaker anonymization technology is provided via the server device 110.

The server device 110 is an example of a speaker anonymization device. As illustrated in FIG. 1, various speech data is transmitted and received in a network 180 to which the server device 110 is connected. The server device 110 provides the speaker anonymization technology to a user such that a speaker is not identified from the speech data transmitted and received via the network 180.

As illustrated in FIG. 1, the following are conceivable as cases in which the speech data is transmitted and received via the network 180.

As an example, an SNS (Social Networking Service) user 131 using an SNS provided by a server device 120 uploads a video with speech to the server device 120. Specifically, this is a case in which the SNS user 131, who does not wish the speaker to be identified, uploads the video with speech to the server device 120 via a terminal 130 (another example of the speaker anonymization device). In this case, the uploaded video with speech is viewed by many unspecified viewers (not shown) via the network 180.

In such a case, the server device 110 performs a providing process of providing the speaker anonymization technology to the user. Specifically, the server device 110 provides an anonymized speech data generation program (details of which will be described below) to the terminal 130 in response to a request from the terminal 130. This enables the SNS user to convert the speech data, included in the video with speech, into anonymized speech data using the anonymized speech data generation program, and then upload the video with speech.

As another example, from a server device 140 configured to manage a personal information database with speech in which speech data of various registrants is associated with personal information of the registrants, the personal information with speech can be leaked. In this case, there is a possibility that the leaked personal information with speech is misused, e.g., used for re-identification attacks.

In preparation for such a case, a speech DB (Database) manager 141 transmits a conversion request to the server device 110 for previously converting, into anonymized speech data, the speech data included in the personal information with speech managed by the server device 140. Thus, the server device 110 performs the providing process of providing the speaker anonymization technology to the user. Specifically, the server device 110 executes the anonymized speech data generation program, converts the speech data included in the conversion request into the anonymized speech data, and transmits the anonymized speech data to the server device 140. As a result, the server device 140 can manage the personal information database with speech converted into the anonymized speech data.

As still another example, there is a case in which digital data for broadcasting is distributed from a broadcasting device 160 in the broadcasting industry, and speech data of a speaker who does not wish to be identified is included in the digital data for broadcasting. In this case, the distributed digital data for broadcasting is viewed by many unspecified viewers (not shown) via the network 180. Note that the speaker who is a speaker of speech data included in the digital data for broadcasting and does not wish to be identified includes, for example, a speaker who is having an interview.

In such a case, the server device 110 executes the providing process of providing the speaker anonymization technology to the user. Specifically, in response to a request from a terminal 150 (another example of the speaker anonymization device) of a broadcaster 151, the server device 110 provides the terminal 150 with the anonymized speech data generation program (details of which will be described below). This enables the broadcaster 151 to convert the speech data, included in the digital data for broadcasting, into anonymized speech data using the anonymized speech data generation program, and then distribute the digital data for broadcasting.

As illustrated in FIG. 1, there is a possibility that a terminal 170 of a re-identification attacker 171 is connected to the network 180. The re-identification attacker 171 is a person who performs a re-identification attack. In the case of FIG. 1, the re-identification attacker 171 includes a person who attempts to identify the SNS user 131 based on the video with speech uploaded by the SNS user 131 to the server device 120. Alternatively, the re-identification attacker 171 includes a person who attempts to identify a speaker based on the digital data for broadcasting distributed by the broadcasting device 160.

Note that the re-identification attacker 171 is assumed to previously have a database in which speech data and personal information of a speaker of the speech data are associated with each other.

In such a case, if the SNS user 131 has not converted the speech data included in the video with speech uploaded to the server device 120 into the anonymized speech data, then the re-identification attacker 171 can easily identify the speaker from the speech data included in the video with speech. Conversely, as described above, if the SNS user 131 has converted the speech data included in the video with speech into the anonymized speech data, then the SNS user 131 can avoid being easily identified by the re-identification attack of the re-identification attacker 171.

Similarly, if the broadcaster 151 has not converted the speech data included in the distributed digital data for broadcasting into the anonymized speech data, then the re-identification attacker 171 can easily identify the speaker from the speech data included in the distributed digital data for broadcasting. Conversely, as described above, if the broadcaster 151 has converted the speech data included in the digital data for broadcasting into the anonymized speech data, then the speaker can avoid being identified from the speech data, included in the distributed digital data for broadcasting, by the re-identification attack of the re-identification attacker 171.

It is assumed that the database previously possessed by the re-identification attacker 171 is a database illegally acquired from the server device 140 by illegally accessing the server device 140.

In such a case, if the speech data included in the personal information with speech managed by the server device 140 has been previously converted into the anonymized speech data, then a speaker can avoid being identified based on the database. Specifically, even by using this database, the re-identification attacker 171 cannot identify the speaker from the speech data included in the video with speech and cannot identify the speaker from the speech data included in the distributed digital data for broadcasting.

### <Hardware Configuration of Server Device>

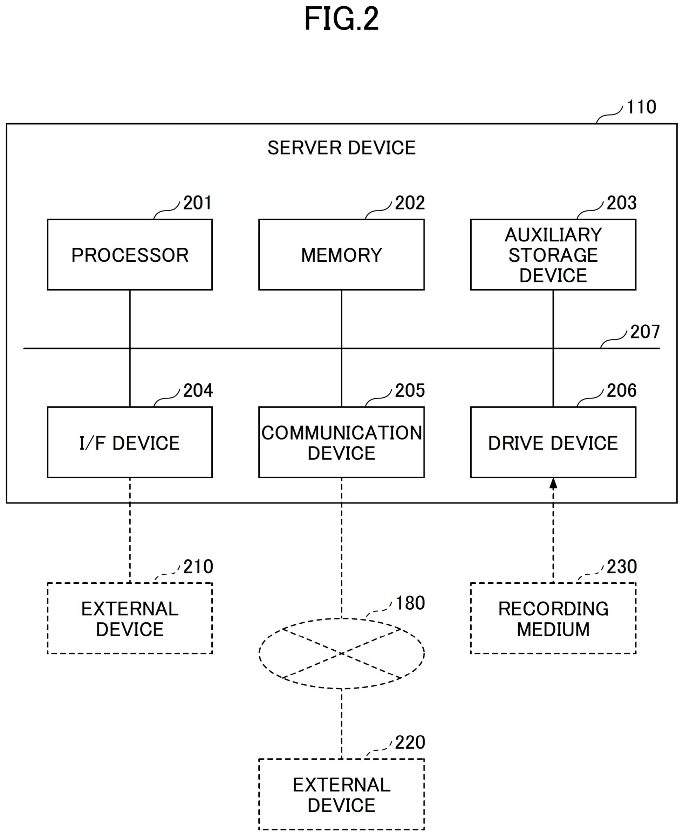

Next, a hardware configuration of the server device 110 according to the first embodiment will be described. FIG. 2 is a diagram illustrating an example of the hardware configuration of the server device.

As illustrated in FIG. 2, the server device 110 includes a processor 201, a memory 202, an auxiliary storage device 203, an I/F (interface) device 204, a communication device 205, and a drive device 206. The hardware components included in the server device 110 are connected to each other via a bus 207.

The processor 201 includes various calculation devices, such as a CPU (Central Processing Unit), a GPU (Graphics Processing Unit), and the like. The processor 201 reads out various programs (e.g., a training program, a generation program, and a providing program, which will be described below) from the memory 202, followed by executing these programs.

The memory 202 includes a main storage device, such as a ROM (Read Only Memory), a RAM (Random Access Memory), and the like. The processor 201 and the memory 202 form what is referred to as a computer. When the processor 201 executes various programs read out from the memory 202, the computer implements various functional units.

The auxiliary storage device 203 stores various programs, and various information used when the various programs are executed by the processor 201. For example, a speech database storage unit 411, a trained model storage unit 412, and a program storage unit 413, which will be described below, are implemented by the auxiliary storage device 203.

The I/F device 204 is a connection device configured to connect to an external device 210 (e.g., an operation device or a display device). The I/F device 204 receives an operation of a manager (not shown) of the server device 110 via the operation device. Also, the I/F device 204 is configured to output results of the processing in the server device 110 and display the output results to the manager of the server device 110 via the display device.

The communication device 205 is a communication device configured to communicate, via the network 180, with an external device 220 (e.g., other terminals, devices, and the like in the network system 100). Specifically, the communication device 205 is configured to communicate, via the network 180, with the terminal 130, the server device 140, the terminal 150, and the like.

The drive device 206 is a device configured to receive a recording medium 230. Here, the recording medium 230 includes a medium configured to optically, electrically, or magnetically record information, such as a CD-ROM, a flexible disk, a magneto-optical disk, or the like. Also, the recording medium 230 may include, for example, a semiconductor memory configured to electrically record information, such as a ROM, a flash memory, or the like.

The various programs installed in the auxiliary storage device 203 are installed, for example, by the distributed recording medium 230 being set in the drive device 206 and the various programs recorded in the recording medium 230 being read out by the drive device 206. Alternatively, the various programs installed in the auxiliary storage device 203 may be installed by being downloaded from the network 180 via the communication device 205.

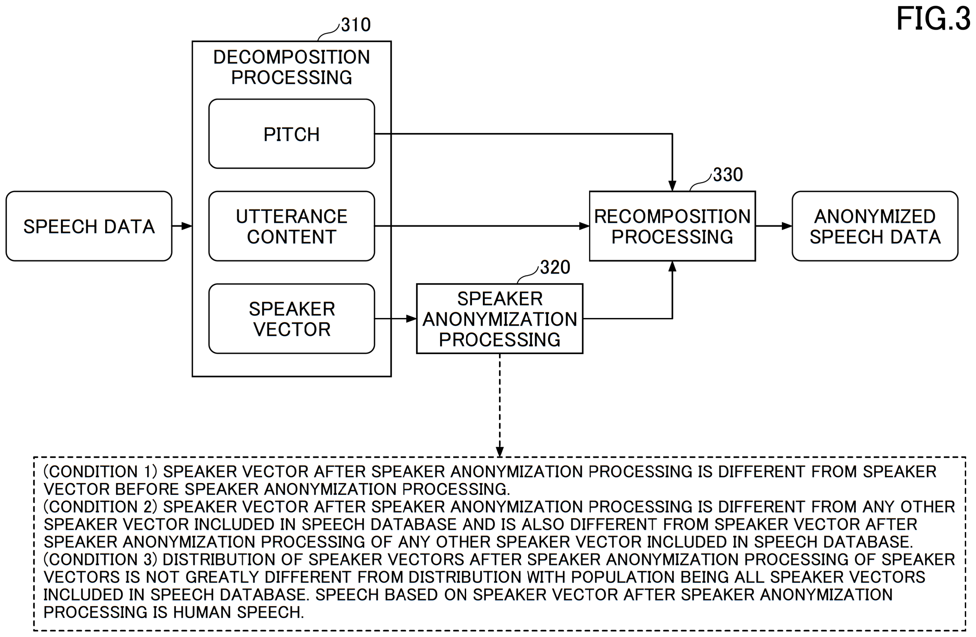

<Outline of Speaker Anonymization Technology> Next, an outline of the speaker anonymization technology provided to a user via the server device 110 according to the first embodiment will be described. FIG. 3 is a diagram for describing the outline of the speaker anonymization technology. As illustrated in FIG. 3, the speaker anonymization technology provided to the user via the server device 110 according to the first embodiment executes:
decomposition processing 310;
speaker anonymization processing 320; and
recomposition processing 330,
thereby converting speech data into anonymized speech data.

As illustrated in FIG. 3, the decomposition processing 310 includes processing of extracting a pitch (fundamental frequency) by decomposing the speech data. The pitch extracted from the speech data is used when executing the recomposition processing 330.

As illustrated in FIG. 3, the decomposition processing 310 includes processing of recognizing utterance content by decomposing the speech data. The utterance content recognized from the speech data is used when executing the recomposition processing 330.

As illustrated in FIG. 3, the decomposition processing 310 includes processing of extracting a speaker vector by decomposing the speech data. The speaker vector extracted from the speech data is used when executing the speaker anonymization processing 320.

The speaker anonymization processing 320 is processing of generating a speaker-anonymized vector from a speaker vector extracted in the decomposition processing 310. The speaker-anonymized vector generated from the speaker vector is used when executing the recomposition processing 330.

Generally speaking, the "speaker anonymization technology" is a technology of processing speech data such that a speaker (e.g., a name) is not identified from the speech data, but content of processing of the "speaker anonymization technology" is not defined from a technical viewpoint. Therefore, there is no ground truth data in anonymized speech data, and there is no ground truth vector in speaker-anonymized vectors generated by the speaker anonymization processing 320.

It is not necessarily acceptable for the speaker anonymization technology to execute any type of processing unless a speaker is identified from speech data. In the network system 100 to which the speaker anonymization technology is applied, maintenance of the convenience of the anonymized speech data and strong robustness against re-identification attacks are required.

In view of this, the applicant of the present application studied the need from a technical viewpoint and defined the following three conditions as conditions to be satisfied when generating the speaker-anonymized vector in the speaker anonymization processing 320.
(Condition 1) A speaker vector after the speaker anonymization processing (speaker-anonymized vector) is different from a speaker vector before the speaker anonymization processing.
(Condition 2) A speaker vector after the speaker anonymization processing (speaker-anonymized vector) is different from any other speaker vector included in the speech database and is also different from a speaker vector after the speaker anonymization processing of any other speaker vector included in the speech database (other speaker-anonymized vector).
(Condition 3) A distribution of speaker vectors after the speaker anonymization processing (speaker-anonymized vectors) is not greatly different from a distribution with a population being all speaker vectors included in the speech database, i.e., speech recomposed based on speaker vectors after the speaker anonymization processing (speaker-anonymized vector) is human speech.

The recomposition processing 330 generates anonymized speech data by recomposing the pitch extracted in the decomposition processing 310, the utterance content extracted in the decomposition processing 310, and the speaker-anonymized vector generated in the speaker anonymization processing 320.

As described above, the speaker anonymization technology provided via the server device 110 according to the first embodiment is a technology of generating anonymized speech data by executing the speaker anonymization processing 320 to satisfy the above three conditions.

### <Functional Configuration of Server Device>

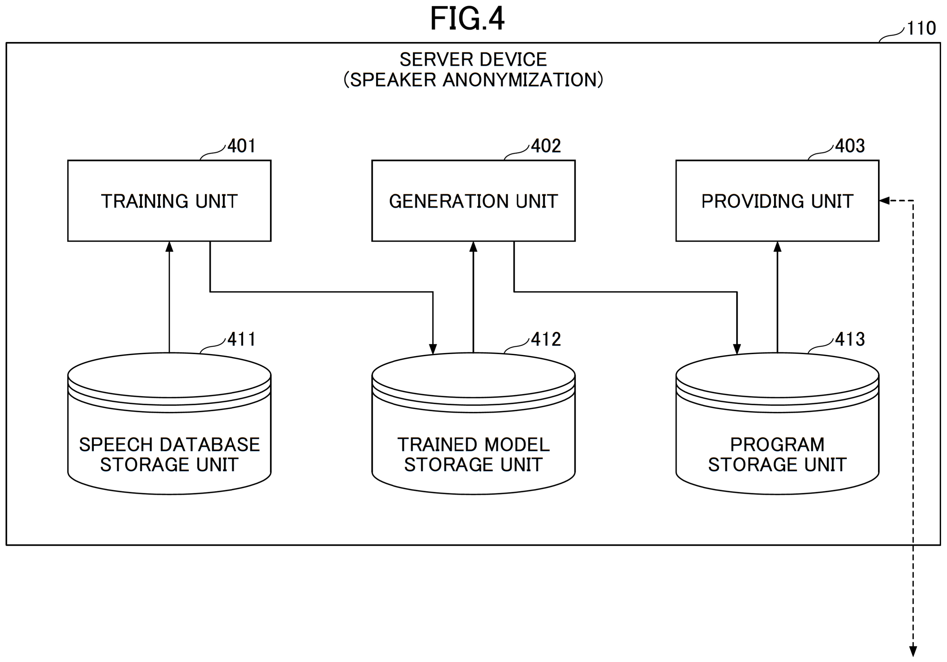

Next, a functional configuration of the server device 110 according to the first embodiment will be described. FIG. 4 is a diagram illustrating an example of the functional configuration of the server device. As described above, a training program, a generation program, a providing program, and the like are installed in the server device 110, and when these programs are executed, the server device 110 functions as a training unit 401, a generation unit 402, and a providing unit 403.

The training unit 401 is configured to read out the speech database stored in the speech database storage unit 411 and train an NN (Neural Network) unit (details of which will be described below) such that the speaker anonymization processing 320 is executed to satisfy the above three conditions. The trained NN unit trained by the training unit 401 is stored in the trained model storage unit 412.

The generation unit 402 is configured to read out the trained NN unit stored in the trained model storage unit 412. Also, the generation unit 402 is configured to construct an anonymized speech data generation program by combining a program for executing the decomposition processing 310 and a program for executing the recomposition processing 330, which are previously included in the generation unit 402, with the read-out trained NN unit. The anonymized speech data generation program constructed by the generation unit 402 is stored in the program storage unit 413.

The providing unit 403 is configured to read out the anonymized speech data generation program stored in the program storage unit 413 and transmit the read-out program to a terminal from which a request has been received (e.g., the terminal 130 or 150 in the example of FIG. 1). Alternatively, the providing unit 403 is configured to read out the anonymized speech data generation program stored in the program storage unit 413, input the speech data included in a conversion request into the read-out anonymized speech data generation program, and execute the anonymized speech data generation program. Also, the providing unit 403 is configured to transmit the anonymized speech data generated by executing the anonymized speech data generation program to a device from which a conversion request has been received (e.g., the server device 140 in the example of FIG. 1).

In this manner, providing the speaker anonymization technology to the user via the server device 110 includes at least:
providing the requester with the anonymized speech data generation program; and
providing the requester with the anonymized speech data generated by executing the anonymized speech data generation program.

### <Details of Training Unit of Server Device>

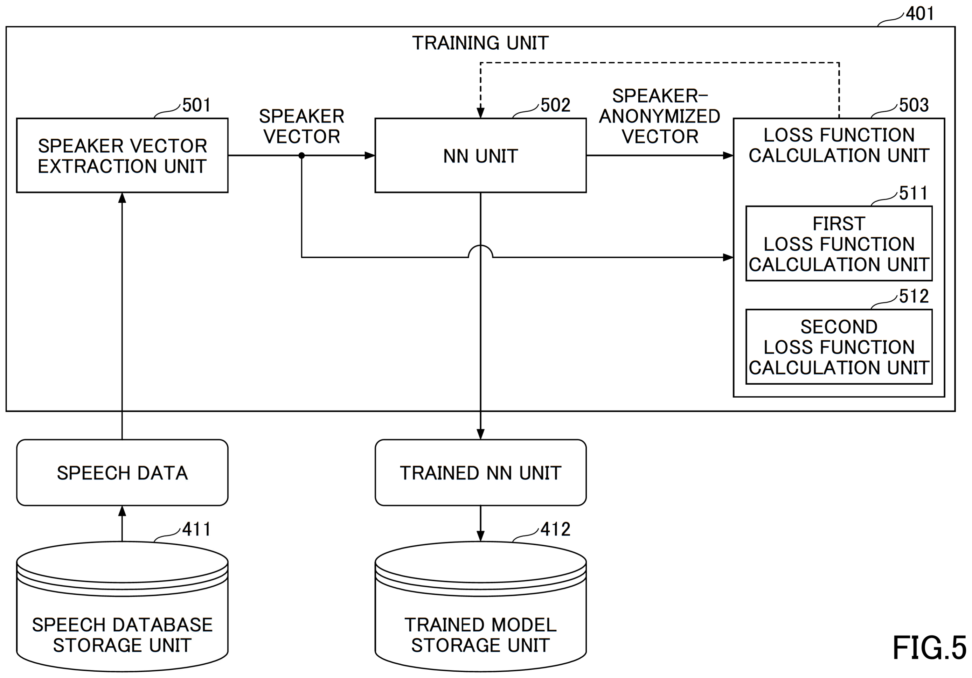

Next, details of the training unit 401 of the server device 110 will be described.
(1) Functional Configuration of Training Unit First, details of the functional configuration of the training unit 401 will be described. FIG. 5 is a diagram illustrating the details of the functional configuration of the training unit. As illustrated in FIG. 5, the training unit 401 includes a speaker vector extraction unit 501, an NN unit 502, and a loss function calculation unit 503.

The speaker vector extraction unit 501 is configured to sequentially read out speech data (an example of speech data to be used for training) stored in the speech database storage unit 411 and extract a speaker vector by decomposing the read-out speech data. The speaker vector extraction unit 501 notifies the NN unit 502 and the loss function calculation unit 503 of the extracted speaker vector.

The NN unit 502 is configured to output a speaker-anonymized vector by receiving an input of the speaker vector notified from the speaker vector extraction unit 501. A weight parameter included in the NN unit 502 is updated based on a loss calculated by the loss function calculation unit 503.

The loss function calculation unit 503 includes a first loss function calculation unit 511 and a second loss function calculation unit 512.

The first loss function calculation unit 511 is configured to calculate a loss according to a function indicating the degree of satisfaction of Condition 1. As described above, Condition 1 is "A speaker vector after the speaker anonymization processing is different from a speaker vector before the speaker anonymization processing". Therefore, the first loss function calculation unit 511 compares a speaker-anonymized vector output from the NN unit 502 with a speaker vector extracted by the speaker vector extraction unit 501. Also, the first loss function calculation unit 511 calculates a loss using a function in which the larger the difference between the two vectors, the smaller the loss, and in which the smaller the difference between the two vectors, the larger the loss.

The second loss function calculation unit 512 is configured to calculate a loss using a function indicating the degree of satisfaction of Condition 2. As described above, Condition 2 is:
the speaker vector after the speaker anonymization processing is different from any other speaker vector included in the speech database; and
the speaker vector after the speaker anonymization processing is different from the speaker vector after the speaker anonymization processing of any other speaker vector included in the speech database.

Therefore, the second loss function calculation unit 512 compares the speaker-anonymized vector output from the NN unit 502 with each of the other speaker vectors extracted by the speaker vector extraction unit 501. Also, the second loss function calculation unit 512 calculates a loss using a function in which the larger the dissimilarity between the two vectors, the smaller the loss, and in which the smaller the dissimilarity between the two vectors, the larger the loss.

Further, the second loss function calculation unit 512 compares the speaker-anonymized vector output from the NN unit 502 with each of the other speaker-anonymized vectors output from the NN unit 502. Also, the second loss function calculation unit 512 calculates a loss using a function in which the larger the dissimilarity between the two vectors, the smaller the loss, and in which the smaller the dissimilarity between the two vectors, the larger the loss.

The loss function calculation unit 503 updates the weight parameter of the NN unit 502 based on the sum of the loss calculated by the first loss function calculation unit 511 and all the losses calculated by the second loss function calculation unit 512.

The trained NN unit, which is the NN unit 502 in which the weight parameter is updated, is stored in the trained model storage unit 412.

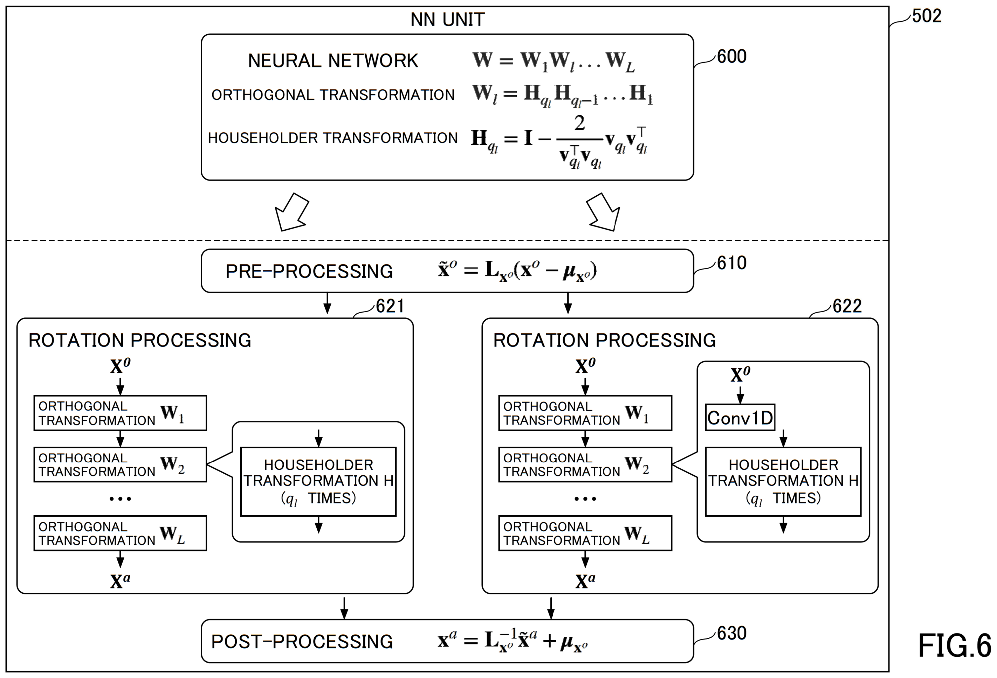

(2) Specific Example of Processing by NN Unit Next, a specific example of processing performed by the NN unit 502 of the training unit 401 will be described. FIG. 6 is a diagram illustrating a specific example of the processing performed by the NN unit.

The NN unit 502 is configured by a neural network configured to perform Householder transformation. Reference numeral 600 denotes definitions of Householder transformation H_{ql}, orthogonal transformation Wₗ, and a neural network W.

As denoted by reference numeral 600, the Householder transformation H_{ql} is calculated using identity matrix I and weight parameter v_{ql}. Also, the orthogonal transformation W₁ is calculated as the product of the Householder transformations H₁ to H_{ql}. Further, the neural network W is calculated as the product of the orthogonal transformations W₁ to W_{L}. As described above, since each of the orthogonal transformations W₁ to W_{L} is calculated as the product of the Householder transformations H₁ to H_{ql}, the product of the orthogonal transformations W₁ to W_{L} can be calculated by repeatedly calculating the product of the Householder transformations H₁ to H_{ql}. That is, the neural network W is a neural network configured to repeatedly calculate the Householder transformation.

As illustrated in the lower portion of FIG. 6, the NN unit 502 transforms speaker vector x⁰ into speaker-anonymized vector x^{a} using the neural network W denoted by reference numeral 600.

Specifically, when the speaker vector x⁰ is input, the NN unit 502 performs:
pre-processing denoted by reference numeral 610 (processing of moving the speaker vector in a direction in which rotation processing denoted by reference numeral 621 or 622 is easily performed);
the rotation processing denoted by reference numeral 621 or 622 on the speaker vector after the pre-processing; and
post-processing denoted by reference numeral 630 (processing of returning the speaker vector after the rotation processing to the original direction), thereby outputting the speaker-anonymized vector x^{a}.

In this manner, the neural network W denoted by reference numeral 600 is used in the rotation processing denoted by reference numeral 621 or 622. Note that the rotation processing is processing configured to achieve satisfaction of Condition 3.

As described above, Condition 3 is that a distribution of speaker vectors after the speaker anonymization processing is not greatly different from a distribution with a population being all speaker vectors (before the speaker anonymization processing) included in the speech database. The NN unit 502 employs a neural network configured to repeatedly calculate the Householder transformation and perform the rotation processing denoted by reference numeral 621 or 622. Thus, the NN unit 502 ensures that the distribution of speaker-anonymized vectors does not greatly deviate from the distribution of the speaker vectors with respect to the center of rotation.

As such, the neural network employed for the trained NN unit generated by the training unit 401 is a neural network that is mathematically confirmed to achieve satisfaction of Condition 3. In other words, the speaker-anonymized vector generated by the trained NN unit is a vector that is mathematically confirmed to satisfy Condition 3.

In the NN unit 502 illustrated in FIG. 6, the rotation processing denoted by reference numeral 621 is configured to randomly initialize the weight parameter v_{ql}. Therefore, according to the rotation processing denoted by reference numeral 621, even if training is performed using the same speech database, the generated trained NN unit is a trained NN unit that is different each time. That is, even if the same speaker vector is input, the anonymized speaker vectors output from the respective trained NN units are speaker-anonymized vectors that are different from each other. Such a trained NN unit is effective in the following case of the application example illustrated in FIG. 1.

For example, this is effective in a case in which the speech data of the SNS user 131 is registered in the server device 140. In such a case, when the SNS user 131 uploads a video with speech, it is assumed that the speech data included in the video with speech is converted into anonymized speech data. Also, it is assumed that the speech DB manager 141 converts the speech data registered in the server device 140 into anonymized speech data. Here, if different trained NN units are used,
the anonymized speech data acquired by converting the speech data included in the video with speech, and
the anonymized speech data acquired by converting the speech data registered in the server device 140,
are different anonymized speech data.

Therefore, even if personal information with speech registered in the server device 140 is leaked, a speaker can avoid being identified by a re-identification attack based on the leaked personal information with speech.

In the NN unit 502 illustrated in FIG. 6, the rotation processing denoted by reference numeral 622 is configured such that the weight parameter v_{ql} is initialized to be a fixed value. Therefore, according to the rotation processing denoted by reference numeral 622, when training is performed using the same speech database, the generated trained NN units are also the same. That is, when the same speaker vector is input, the anonymized speaker vectors output from the respective trained NN units are the same speaker-anonymized vector. Such a trained NN unit is effective in the following case of the application example illustrated in FIG. 1.

For example, this is effective in a case in which speech of the SNS user 131 is distributed as digital data for broadcasting after the SNS user 131 anonymously had an interview. In such a case, when the broadcaster 151 distributes the digital data for broadcasting, it is assumed that the speech data included in the digital data for broadcasting is converted into anonymized speech data. Here, if a trained NN unit that is the same as used when the SNS user 131 converts the speech data included in the video with speech into the anonymized speech data is used,
the anonymized speech data acquired by converting the speech data included in the video with speech, and
the anonymized speech data acquired by converting the speech data included in the digital data for broadcasting, are the same anonymized speech data.

Therefore, a viewer who views the video with speech of the SNS user 131 can hear the speech of the SNS user 131 included in the digital data for broadcasting without feeling uncomfortable.

### (3) Specific Example of Processing by Loss Function Calculation Unit

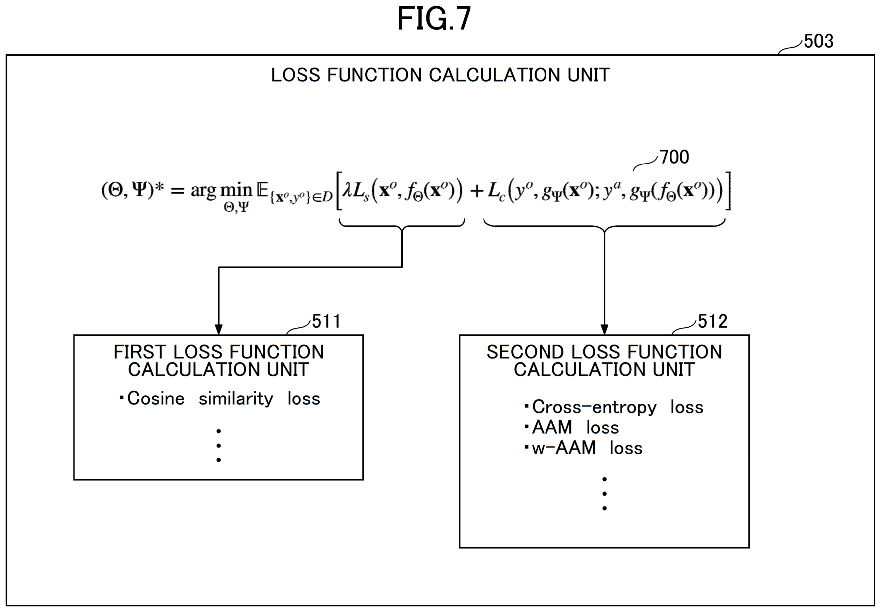

Next, a specific example of processing performed by the loss function calculation unit 503 of the training unit 401 will be described. FIG. 7 is a diagram illustrating the specific example of the processing performed by the loss function calculation unit.

In FIG. 7, reference numeral 700 denotes an example of a loss function used when calculating a loss in the loss function calculation unit 503. As described above, the loss function calculation unit 503 calculates the sum of a loss calculated by the first loss function calculation unit 511 (L_{S} in reference numeral 700) and a loss calculated by the second loss function calculation unit 512 (L_{C} in reference numeral 700) (weighted addition value using coefficient λ).

The example of FIG. 7 illustrates that the first loss function calculation unit 511 uses a cosine distance when calculating a loss in accordance with the difference between the speaker vector x⁰ and speaker-anonymized vector x^{a}=f_{θ} (x⁰).

Also, the example of FIG. 7 illustrates that, when calculating
the sum of classification losses between: class g_{Ψ}(x⁰) of the speaker vector x⁰ and class g_{Ψ}(f_{θ}(x⁰)) of the speaker-anonymized vector x^{a}=f_{θ}(x⁰) output from the NN unit 502; and each of the other speaker vectors y⁰ extracted by the speaker vector extraction unit 501, and
the sum of classification losses between: class g_{Ψ}(x⁰) of the speaker vector x⁰ and class g_{Ψ}(f_{θ}(x⁰)) of the speaker-anonymized vector x^{a}=f_{θ}(x⁰) output from the NN unit 502; and each of the other speaker-anonymized vectors y^{a} output from the NN unit 502,
the second loss function calculation unit 512 uses
"Cross-entropy loss",
"AAM (Additive Angular Margin softmax) loss",
"w-AAM (Weighted Additive Angular Margin softmax) loss",
or the like.

As such, the trained NN unit generated by the training unit 401 is trained using a loss function that is mathematically confirmed to achieve satisfaction of Conditions 1 and 2. In other words, the speaker-anonymized vector generated by the trained NN unit is a vector that is mathematically confirmed to satisfy Conditions 1 and 2.

### (4) Relationship between Speaker Vector and Speaker-anonymized vector

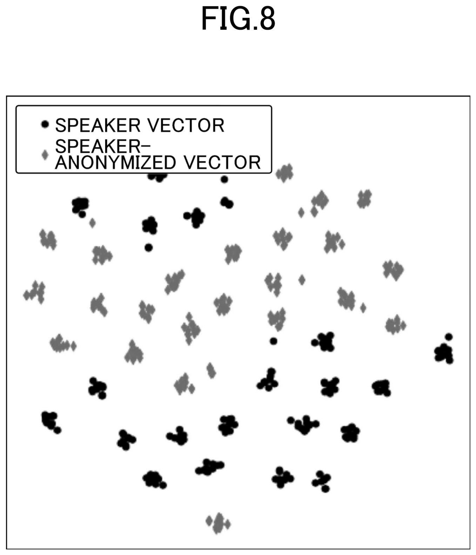

Next, a description will be made of a relationship between the speaker vector before the speaker anonymization processing and the speaker-anonymized vector when the speaker anonymization processing is performed using the trained NN unit to generate the speaker-anonymized vector from the speaker vector. FIG. 8 is a diagram illustrating the relationship between the speaker vector and the speaker-anonymized vector.

In FIG. 8, black dots indicate positions of the speaker vectors in a multidimensional space. In FIG. 8, for the sake of convenience of the description, the black dots are projected onto a predetermined two-dimensional plane. Also, in FIG. 8, green dots indicate positions, in the multidimensional space, of the speaker-anonymized vectors generated by performing the speaker anonymization processing using the trained NN unit. In FIG. 8, for the sake of convenience of the description, the green dots are projected onto the predetermined two-dimensional plane.

As illustrated in FIG. 8, since the green dots and the black dots do not overlap with each other, it is found that each of the speaker-anonymized vectors generated by performing the speaker anonymization processing using the trained NN unit is different from any of the speaker vectors before the speaker anonymization processing. Note that a group of the black dots appear to overlap with each other because the black dots are projected onto the predetermined two-dimensional plane. The black dots exist at positions separate from each other at least in a depth direction of the paper surface. Similarly, a group of the green dots appear to overlap with each other because the green dots are projected onto the predetermined two-dimensional plane. The green dots exist at positions separate from each other at least in the depth direction of the paper surface. That is, it is found that each of the speaker-anonymized vectors generated by performing the speaker anonymization processing using the trained NN unit is different from any other speaker-anonymized vector.

Further, as illustrated in FIG. 8, it is found that the distribution of the green dots does not greatly deviate from the distribution of the black dots.

The above finding can support that the speaker-anonymized vector generated by performing speaker anonymization processing using the trained NN unit is a vector that satisfies Conditions 1 to 3.

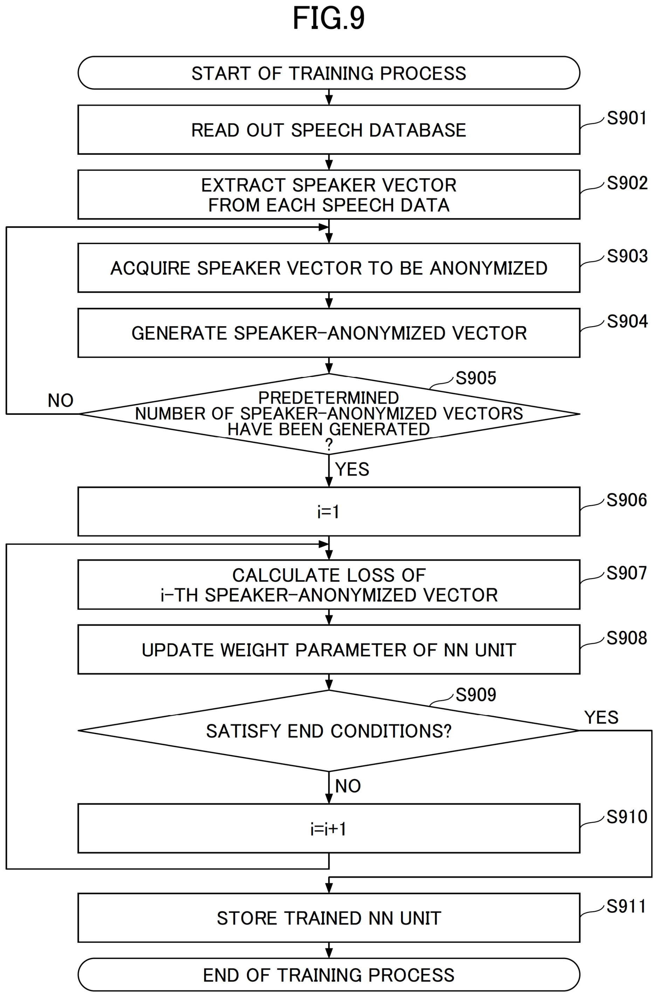

(5) Flow of Training Process by Training Unit Next, a flow of a training process performed by the training unit 401 will be described. FIG. 9 is an example of a flowchart illustrating the training process performed by the training unit.

In step S901, the training unit 401 reads out a speech database from the speech database storage unit 411.

In step S902, the training unit 401 extracts a speaker vector by decomposing each piece of speech data included in the read-out speech database.

In step S903, the training unit 401 acquires a speaker vector to be anonymized.

In step S904, the training unit 401 inputs the acquired speaker vector into the NN unit 502 to generate a speaker-anonymized vector from the speaker vector.

In step S905, the training unit 401 determines whether or not a predetermined number of speaker-anonymized vectors have been generated. If it is determined in step S905 that the predetermined number of speaker-anonymized vectors have not been generated (NO in step S905), the process returns to step S903. If it is determined in step S905 that the predetermined number of speaker-anonymized vectors have been generated (YES in step S905), the process proceeds to step S906.

In step S906, the training unit 401 inputs "1" into a counter i configured to count the speaker-anonymized vectors.

In step S907, the training unit 401 calculates a loss for the i-th speaker-anonymized vector. Specifically, the training unit 401 calculates a loss by comparing, with the i-th speaker-anonymized vector, a speaker vector corresponding to the i-th speaker-anonymized vector of the speaker vectors extracted in step S902. Also, the training unit 401 calculates a loss by comparing, with the i-th speaker-anonymized vector, a speaker vector other than the speaker vector corresponding to the i-th speaker-anonymized vector of the speaker vectors extracted in step S902. Also, the training unit 401 calculates a loss by comparing, with the i-th speaker-anonymized vector, a speaker-anonymized vector other than the i-th speaker-anonymized vector of the speaker-anonymized vectors generated in step S904.

In step S908, the training unit 401 updates the weight parameter of the NN unit in accordance with the calculated loss.

In step S909, the training unit 401 determines whether or not end conditions of the training process are satisfied.

If it is determined in step S909 that the end conditions of the training process are not satisfied (NO in step S909), the process proceeds to step S910.

In step S910, the training unit 401 increments the counter i and then the process returns to step S907.

If it is determined in step S909 that the end conditions of the training process are satisfied (YES in step S909), the process proceeds to step S911.

In step S911, the training unit 401 stores the trained NN unit in the trained model storage unit 412 and ends the training process.

### <Details of Generation Unit and Providing Unit of Server Device>

Next, details of the generation unit 402 and the providing unit 403 of the server device 110 will be described.

### (1) Functional Configurations of Generation Unit and Providing Unit

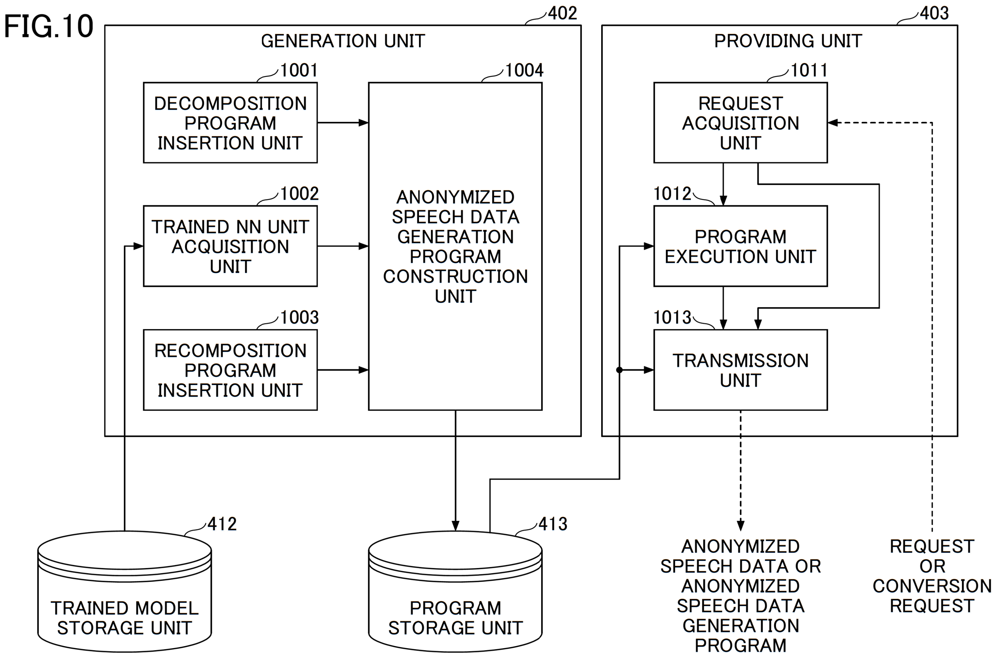

First, details of functional configurations of the generation unit 402 and the providing unit 403 will be described. FIG. 10 is a diagram illustrating the details of the functional configurations of the generation unit and the providing unit. As illustrated in FIG. 10, the generation unit 402 includes a decomposition program insertion unit 1001, a trained NN unit acquisition unit 1002, a recomposition program insertion unit 1003, and an anonymized speech data generation program construction unit 1004.

The decomposition program insertion unit 1001 is configured to insert, into the anonymized speech data generation program construction unit 1004, a decomposition program for executing the decomposition processing 310, which extracts a pitch, utterance content, and a speaker vector by decomposing speech data. Note that it is assumed that the decomposition program insertion unit 1001 previously includes the decomposition program.

For example, the decomposition program insertion unit 1001 includes, as a program for extracting the pitch, a program to which a Prosody encoder is applied. Also, the decomposition program insertion unit 1001 includes, as a program for extracting the utterance content, a program to which HuBERT is applied. Also, the decomposition program insertion unit 1001 includes, as a program for extracting the speaker vector, a program to which ECAPA-TDNN is applied. Here, ECAPA-TDNN is an abbreviation of "Emphasized Channel Attention, Propagation and Aggregation in Time-Delay Neural Network".

The trained NN unit acquisition unit 1002 is configured to read out the trained NN unit from the trained model storage unit 412 and insert the read-out unit into the anonymized speech data generation program construction unit 1004.

The recomposition program insertion unit 1003 is configured to insert, into the anonymized speech data generation program construction unit 1004, a recomposition program for executing the recomposition processing 330, which recomposes the pitch, the utterance content, and the speaker-anonymized vector. Note that it is assumed that the recomposition program insertion unit 1003 previously includes a recomposition program.

For example, the recomposition program insertion unit 1003 includes, as the recomposition program, a program to which HiFi-GAN is applied.

The anonymized speech data generation program construction unit 1004 is configured to acquire:
the decomposition program inserted by the decomposition program insertion unit 1001;
the trained NN unit inserted by the trained NN unit acquisition unit 1002; and
the recomposition program inserted by the recomposition program insertion unit 1003. The anonymized speech data generation program construction unit 1004 constructs the anonymized speech data generation program by combining the decomposition program, the trained NN unit, and the recomposition program. The anonymized speech data generation program construction unit 1004 stores the constructed anonymized speech data generation program in the program storage unit 413.

As illustrated in FIG. 10, the providing unit 403 includes a request acquisition unit 1011, a program execution unit 1012, and a transmission unit 1013.

The request acquisition unit 1011 is configured to receive, via the terminal 130 or 150, a request for downloading the anonymized speech data generation program from a user (e.g., the SNS user 131 or the broadcaster 151) who uses the anonymized speech data generation program. Alternatively, the request acquisition unit 1011 is configured to receive a conversion request for converting speech data into anonymized speech data from a user (e.g., the speech DB manager 141) who uses the anonymized speech data generation program.

When the request acquisition unit 1011 receives the request for downloading the anonymized speech data generation program, the request acquisition unit 1011 notifies the transmission unit 1013 of that request. When the request acquisition unit 1011 receives the conversion request for converting the speech data into the anonymized speech data, the request acquisition unit 1011 notifies the program execution unit 1012 of that conversion request.

When the conversion request is notified from the request acquisition unit 1011, the program execution unit 1012 extracts speech data included in the notified conversion request. Also, the program execution unit 1012 reads out the anonymized speech data generation program from the program storage unit 413, inputs the extracted speech data into the read-out anonymized speech data generation program, and executes the anonymized speech data generation program. The program execution unit 1012 notifies the transmission unit 1013 of the anonymized speech data generated by executing the anonymized speech data generation program.

When the request for downloading the anonymized speech data generation program is notified from the request acquisition unit 1011, the transmission unit 1013 reads out the anonymized speech data generation program from the program storage unit 413 and transmits the read-out program to the requester (e.g., the terminal 130 or 150).

Also, when the anonymized speech data is notified from the program execution unit 1012, the transmission unit 1013 transmits the anonymized speech data to the requester (e.g., the server device 140).

### (2) Flow of Generation Process by Generation Unit

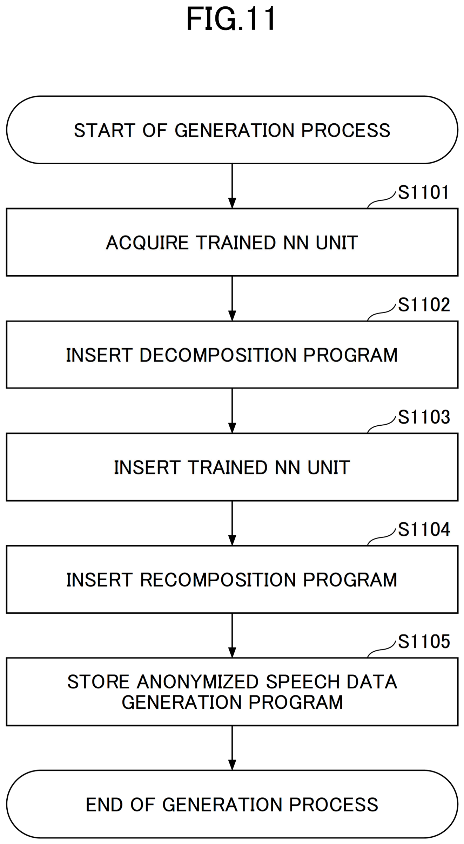

Next, a flow of a generation process performed by the generation unit 402 will be described. FIG. 11 is a flowchart illustrating the generation process performed by the generation unit.

In step S1101, the generation unit 402 acquires a trained NN unit from the trained model storage unit 412.

In step S1102, the generation unit 402 inserts a decomposition program into the anonymized speech data generation program.

In step S1103, the generation unit 402 inserts the trained NN unit into the anonymized speech data generation program.

In step S1104, the generation unit 402 inserts a recomposition program into the anonymized speech data generation program.

In step S1105, the generation unit 402 stores the anonymized speech data generation program in the program storage unit 413.

### (3) Flow of Providing Process by Providing Unit

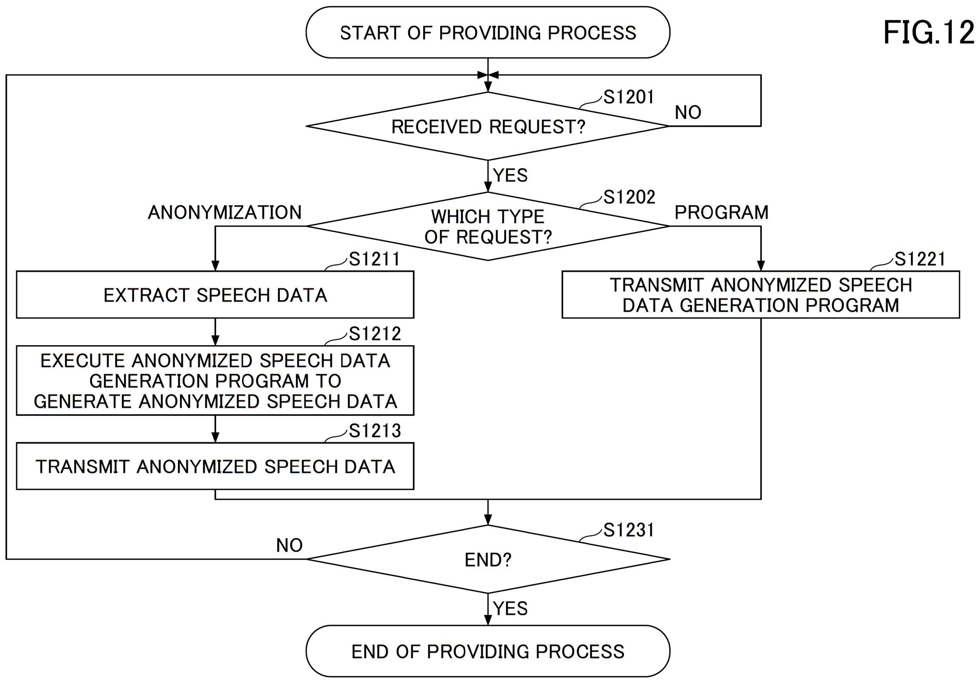

Next, a flow of a providing process of the speaker anonymization technology performed by the providing unit 403 will be described. FIG. 12 is a flowchart illustrating the providing process performed by the providing unit.

In step S1201, the providing unit 403 determines whether or not a request for downloading an anonymized speech data generation program or a conversion request for converting speech data into anonymized speech data has been received from a terminal or device via the network 180.

If it is determined in step S1201 that no request has been received (NO in step S1201), the process does not proceed until the request is received.

If it is determined in step S1201 that the request has been received (YES in step S1201), the process proceeds to step S1202.

In step S1202, the providing unit 403 determines a type of the received request. In step S1202, when it is determined that the received request is the conversion request for converting speech data into anonymized speech data, the process proceeds to step S1211.

In step S1211, the providing unit 403 extracts speech data included in the conversion request.

In step S1212, the providing unit 403 reads out the anonymized speech data generation program, inputs the extracted speech data into the read-out anonymized speech data generation program, and executes the anonymized speech data generation program, thereby generating anonymized speech data.

In step S1213, the providing unit 403 transmits the generated anonymized speech data to the requester.

If it is determined in step S1202 that the received request is a request for downloading the anonymized speech data generation program, the process proceeds to step S1221.

In step S1221, the providing unit 403 reads out the anonymized speech data generation program and transmits the read-out program to the requester.

In step S1231, the providing unit 403 determines whether or not to end the providing process. If it is determined in step S1231 to continue the providing process (NO in step S1231), the process returns to step S1201. If it is determined in step S1231 to end the providing process (YES in step S1231), the providing process of the speaker anonymization technology is ended.

### <Hardware Configuration of Terminal>

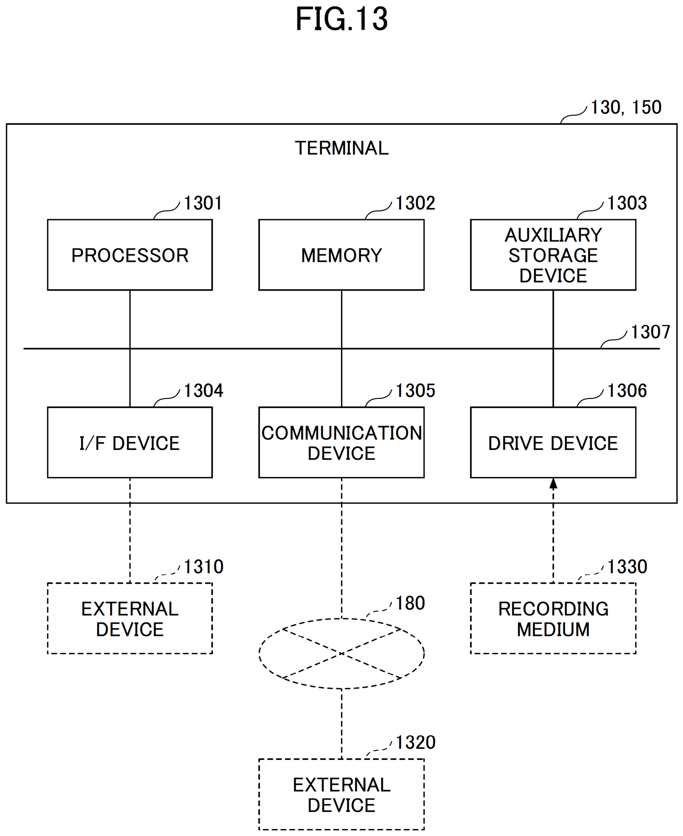

Next, a hardware configuration of a terminal (e.g., the terminal 130 or 150) operated by a user (here, the SNS user 131, the broadcaster 151, or the like) who uses the anonymized speech data generation program will be described. FIG. 13 is a diagram illustrating an example of the hardware configuration of the terminal. The hardware configurations of the terminals 130 and 150 operated by the SNS user 131, the broadcaster 151, and the like are the same as the hardware configuration of the server device 110 described with reference to FIG. 2. Thus, differences from the hardware configuration of the server device 110 will be mainly described.

For example, a processor 1301 is configured to read out, as one of various programs, the anonymized speech data generation program from a memory 1302 and execute the read-out program. An auxiliary storage device 1303 implements, for example, a speech data storage unit 1440, which will be described below.

An I/F device 1304 is configured to receive an operation performed by the SNS user 131, the broadcaster 151, or the like via an operation device, which is an example of an external device 1310. Also, the I/F device 1304 is configured to output an operation screen for an operation to be performed by the SNS user 131, the broadcaster 151, or the like, and display the operation screen to the SNS user 131, the broadcaster 151, or the like via a display device, which is an example of the external device 1310. Further, in the case of the terminal 150, the I/F device 1304 outputs results of processing (anonymized speech data) to the broadcasting device 160, which is an example of the external device 1310.

A communication device 1305 communicates, via the network 180, with the server device 110, the server device 120, or the like, which is an example of an external device 1320.

The anonymized speech data generation program to be installed in an auxiliary storage device 1303 is downloaded, and then installed, from the network 180 via the communication device 1305. Alternatively, in the case of the terminal 150, the anonymized speech data generation program to be installed in the auxiliary storage device 1303 may be installed by a drive device 1306 reading out the anonymized speech data generation program recorded in a recording medium 1330.

### <Functional Configuration of Terminal>

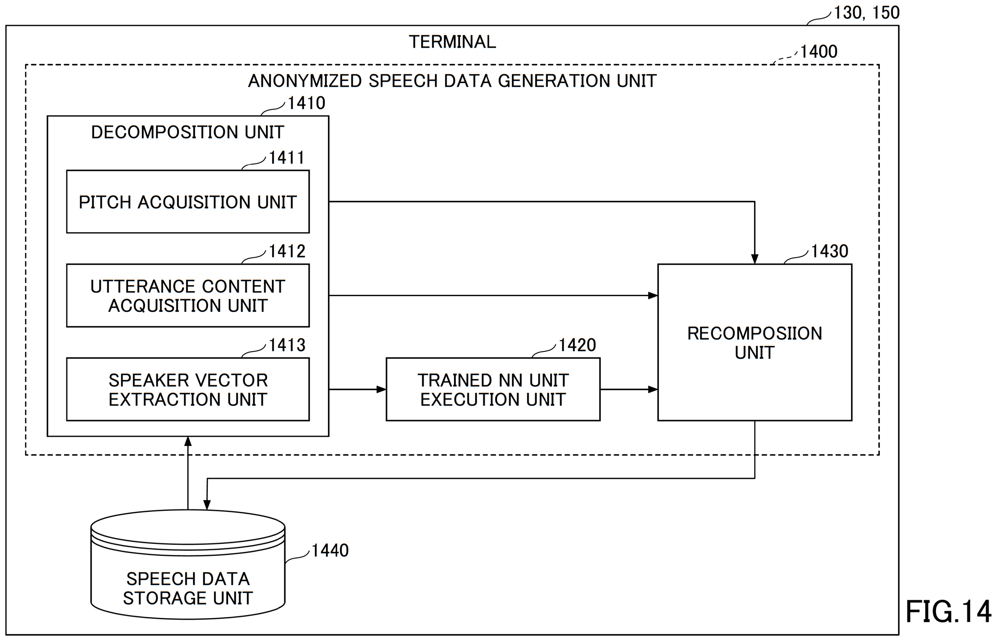

Next, a functional configuration of the terminal (e.g., the terminal 130 or 150) operated by the user (here, the SNS user 131, the broadcaster 151, or the like) who uses the anonymized speech data generation program will be described. FIG. 14 is a diagram illustrating an example of the functional configuration of the terminal. As described above, the anonymized speech data generation program is previously installed in the terminal 130 or 150, and when this program is executed, the terminal 130 or 150 functions as an anonymized speech data generation unit 1400.

As illustrated in FIG. 14, the anonymized speech data generation unit 1400 includes a decomposition unit 1410, a trained NN unit execution unit 1420, and a recomposition unit 1430.

The decomposition unit 1410 further includes a pitch acquisition unit 1411, an utterance content acquisition unit 1412, and a speaker vector extraction unit 1413.

The pitch acquisition unit 1411 is configured to read out speech data (an example of speech data to be anonymized) from the speech data storage unit 1440 and extract a pitch by decomposing the read-out speech data. The pitch acquisition unit 1411 is configured to extract the pitch, for example, by executing a program to which a Prosody encoder is applied. The pitch acquisition unit 1411 is configured to notify the recomposition unit 1430 of the extracted pitch. It is assumed that the speech data to be anonymized (e.g., speech data included in a video with speech, or speech data included in digital data for broadcasting) is stored in the speech data storage unit 1440.

The utterance content acquisition unit 1412 is configured to perform speech recognition processing on the speech data read out from the speech data storage unit 1440 to extract utterance content. The utterance content acquisition unit 1412 is configured to extract the utterance content, for example, by executing a program to which HuBERT is applied. The utterance content acquisition unit 1412 is configured to notify the recomposition unit 1430 of the extracted utterance content.

The speaker vector extraction unit 1413 is configured to extract a speaker vector from the speech data read out from the speech data storage unit 1440. The speaker vector extraction unit 1413 is configured to extract the speaker vector, for example, by executing a program to which ECAPA-TDNN is applied. The speaker vector extraction unit 1413 is configured to notify the trained NN unit execution unit 1420 of the extracted speaker vector.

The trained NN unit execution unit 1420 is configured to generate a speaker-anonymized vector by inputting, into the trained NN unit, the speaker vector notified from the speaker vector extraction unit 1413, and executing the trained NN unit. Also, the trained NN unit execution unit 1420 is configured to notify the recomposition unit 1430 of the generated speaker-anonymized vector.

The recomposition unit 1430 is configured to recompose the pitch notified from the pitch acquisition unit 1411, the utterance content notified from the utterance content acquisition unit 1412, and the speaker-anonymized vector notified from the trained NN unit execution unit 1420, thereby generating anonymized speech data. The recomposition unit 1430 is configured to generate the anonymized speech data, for example, by executing a program to which HiFi-GAN is applied. The recomposition unit 1430 is configured to store the generated anonymized speech data in the speech data storage unit 1440.

### <Flow of Anonymized Speech data Generation Process>

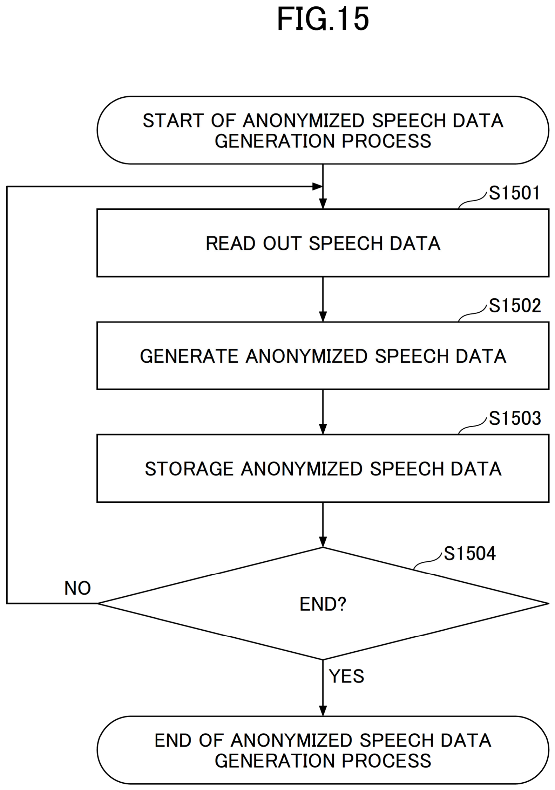

Next, a flow of an anonymized speech data generation process performed by the anonymized speech data generation unit 1400 will be described. FIG. 15 is a flowchart illustrating an example of the anonymized speech data generation process performed by the anonymized speech data generation unit. The terminals 130 and 150, and the like perform the anonymized speech data generation process illustrated in FIG. 15 by executing the anonymized speech data generation program.

In step S1501, the anonymized speech data generation unit 1400 reads out speech data from the speech data storage unit 1440.

In step S1502, the anonymized speech data generation unit 1400 generates anonymized speech data from the read-out speech data.

In step S1503, the anonymized speech data generation unit 1400 stores the generated anonymized speech data in the speech data storage unit 1440.

In step S1504, the anonymized speech data generation unit 1400 determines whether or not to end the anonymized speech data generation process. If it is determined in step S1504 to continue the anonymized speech data generation process (NO in step S1504), the process returns to step S1501. If it is determined in step S1504 to end the anonymized speech data generation process (YES in step S1504), the anonymized speech data generation process is ended.

### <Characteristics of Anonymized Speech data>

Next, characteristics of anonymized speech data generated by executing the anonymized speech data generation program will be described.

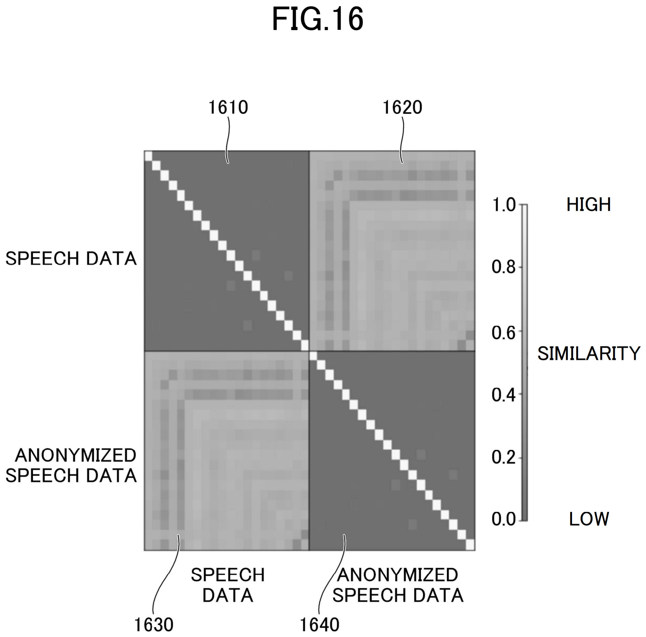

FIG. 16 is a graph illustrating characteristics of anonymized speech data. In FIG. 16, speech data (before the speaker anonymization processing) or anonymized speech data is respectively arranged on the horizontal axis and the vertical axis. The color of a region in which any of the speech data (before the speaker anonymization processing) or the anonymized speech data on the horizontal axis crosses any of the speech data (before the speaker anonymization processing) or the anonymized speech data on the vertical axis represents similarity between:
given speech data (before the speaker anonymization processing) or anonymized speech data on the horizontal axis; and
its corresponding speech data (before the speaker anonymization processing) or anonymized speech data on the vertical axis. In the example illustrated in FIG. 16, the color is closer to yellow as the similarity is higher, and the color is closer to green as the similarity is lower.

According to the example illustrated in FIG. 16, comparison between the speech data indicates that each speech data (before the speaker anonymization processing) has low similarity to any other speech data (before the speaker anonymization processing) (see a region 1610). Yellow portions in the region 1710 indicate similarity between the same person's speech data.

Also, in the example of FIG. 16, comparison between the anonymized speech data indicates that each anonymized speech data has low similarity to any other anonymized speech data (see a region 1640). Yellow portions in the region 1640 indicate similarity between the same person's anonymized speech data.

Also, in the example of FIG. 16, comparison between the speech data (before the speaker anonymization processing) and the anonymized speech data indicates that each anonymized speech data has low similarity to the speech data (see regions 1620 and 1630). Note that the region 1620 and the region 1630 exhibit substantially the same result except that a vertical-horizontal relationship is reversed.

As such, each anonymized speech data generated by executing the anonymized speech data generation program has characteristics in that:
the similarity to the corresponding same person's speech data (before the speaker anonymization processing) is low (the regions 1620 and 1630);
the similarity to any speech data other than the corresponding speech data (before the speaker anonymization processing) is low (the regions 1620 and 1630); and
the similarity to any other anonymized speech data is low (the region 1640).

### <Outline of Evaluation Indices for Anonymized Speech Data>

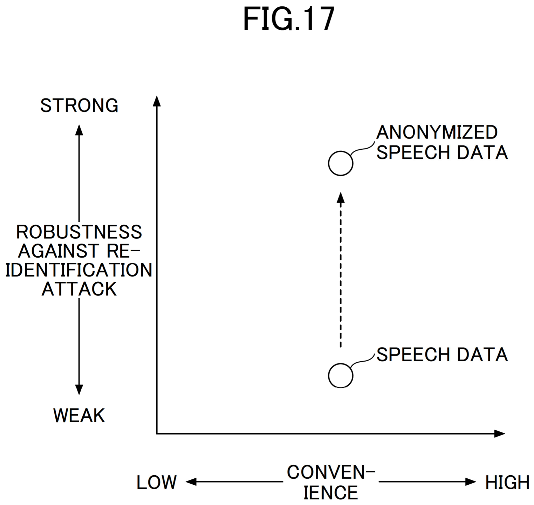

Next, an outline of evaluation indices for evaluating anonymized speech data generated by executing the anonymized speech data generation program will be described. FIG. 17 is a graph illustrating the outline of the evaluation indices of the anonymized speech data.

In a distribution graph illustrated in FIG. 17, the horizontal axis represents convenience, and the vertical axis represents robustness against re-identification attacks. The convenience is higher toward the right side and lower toward the left side. The robustness against re-identification attacks is stronger toward the upper side and weaker toward the lower side. In this case, data located at the upper-right side is beneficial as the anonymized speech data.

Here, the anonymized speech data generation program provided by the server device 110 according to the first embodiment converts only the speaker vector without changing the pitch and the utterance content of the speech data. Therefore, in comparison with the original speech data, the anonymized speech data generated by the anonymized speech data generation program ideally has:
maintained convenience; and
improved robustness against re-identification attacks.

That is, in the distribution graph illustrated in FIG. 17, desirably, the anonymized speech data generated by the anonymized speech data generation program is plotted directly above the original speech data and far away from the original speech data.

### <Evaluation of Anonymized Speech Data>

Next, for evaluating the anonymized speech data generated by executing the anonymized speech data generation program under the above evaluation indices, the convenience and the robustness against re-identification attacks are verified.

### (1) Verification of Robustness against Re-identification Attacks

First, the robustness against re-identification attacks of the anonymized speech data generated by executing the anonymized speech data generation program is verified.

### (1-1) Method of Verification Experiment

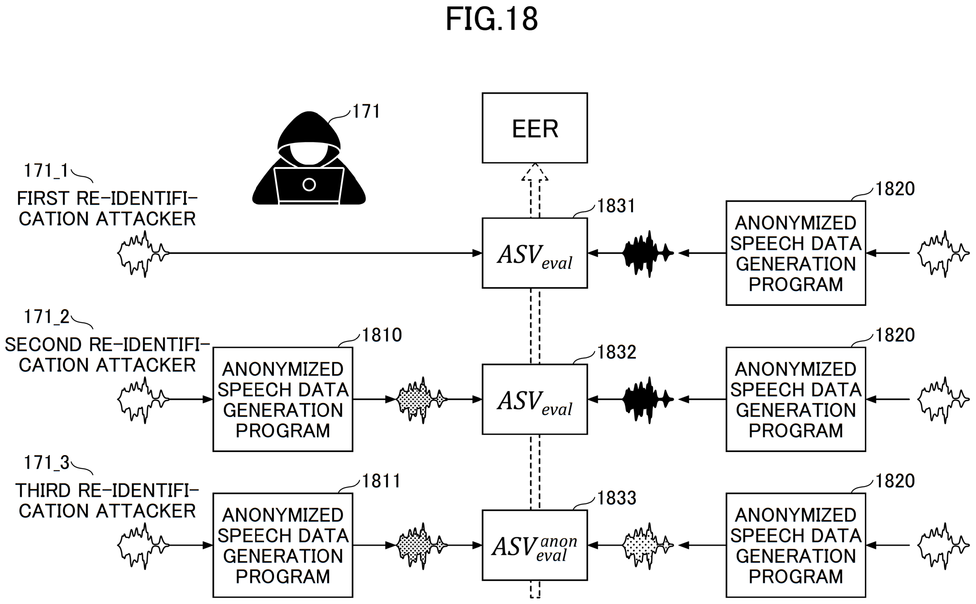

First, a method of a verification experiment will be described. FIG. 18 is a diagram illustrating the method of the verification experiment of the robustness of the anonymized speech data against re-identification attacks.

As illustrated in FIG. 18, in the verification experiment of the robustness of the anonymized speech data against re-identification attacks, re-identification attackers of three different levels were assumed as re-identification attackers 171. In FIG. 18,
a first re-identification attacker 171_1 is a re-identification attacker of a low skill level of re-identification attacks,
a second re-identification attacker 171_2 is a re-identification attacker of an intermediate skill level of re-identification attacks, and
a third re-identification attacker 171_3 is a re-identification attacker of a high skill level of re-identification attacks.

In the example of FIG. 18, it is assumed that each re-identification attacker performs a re-identification attack on the anonymized speech data generated by executing, on speech data for verification, an anonymized speech data generation program 1820 including the trained NN unit execution unit 1420.

Specifically, the first re-identification attacker 171_1 attempts speaker authentication of anonymized speech data generated by executing the anonymized speech data generation program 1820, without using any anonymized speech data generation program. It is assumed that a speaker authentication unit 1831 is previously trained to extract a feature of speech data for training (before the speaker anonymization processing). The speaker authentication unit 1831 performs speaker authentication by collating a feature of the anonymized speech data, generated by executing the anonymized speech data generation program 1820, to a feature of speech data input by the first re-identification attacker 171_1. Here, an evaluator calculates an EER (Equal Error Rate) indicating how successful the speaker authentication is.

Also, the second re-identification attacker 171_2 attempts speaker authentication of anonymized speech data generated by executing the anonymized speech data generation program 1820, using its own anonymized speech data generation program 1810. It is assumed that a speaker authentication unit 1832 is previously trained to extract a feature of speech data for training (before the speaker anonymization processing). The speaker authentication unit 1832 collates a feature of the anonymized speech data, generated by executing the anonymized speech data generation program 1820, to a feature of the anonymized speech data generated by executing the anonymized speech data generation program 1810. Thus, the speaker authentication unit 1832 performs speaker authentication. Here, the evaluator calculates the EER.

Also, the third re-identification attacker 171_3 attempts speaker authentication of anonymized speech data generated by executing the anonymized speech data generation program 1820, using its own high-level anonymized speech data generation program 1811. It is assumed that a speaker authentication unit 1833 is previously trained to extract a feature of anonymized speech data for training. The speaker authentication unit 1833 collates a feature of the anonymized speech data, generated by executing the anonymized speech data generation program 1820, to a feature of the anonymized speech data generated by executing the anonymized speech data generation program 1811. Thus, the speaker authentication unit 1833 performs speaker authentication. Here, the evaluator calculates the EER.

As a result, according to the method of the verification experiment illustrated in FIG. 18, it is possible to verify the robustness against the re-identification attacks of the anonymized speech data generated by executing the anonymized speech data generation program 1820.

### (1-2) Results of Verification Experiment

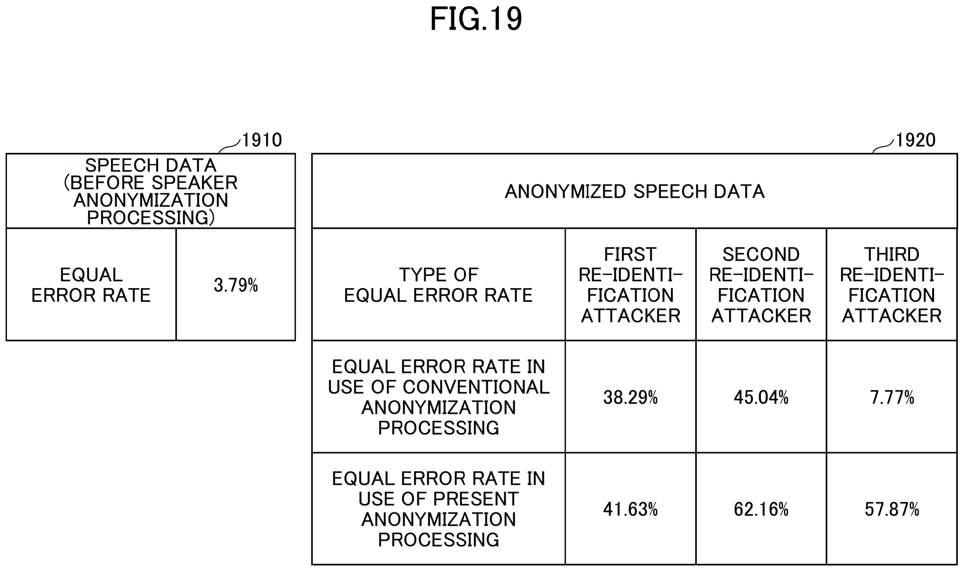

Next, the results of the verification experiment based on the method described in (1-1) above will be described. FIG. 19 is tables illustrating the results of the verification experiment of the robustness of the anonymized speech data against the re-identification attacks.

In the results of the verification experiment illustrated in FIG. 19, an equal error rate obtained when speaker authentication is performed on the speech data (before the speaker anonymization processing) (when the anonymized speech data generation program 1820 is not executed in FIG. 18) is also illustrated as a Reference Example. In FIG. 19, reference numeral 1910 denotes the equal error rate obtained when speaker authentication is performed on the speech data (before the speaker anonymization processing).

Reference numeral 1920 denotes the equal error rates obtained when the first re-identification attacker 171_1 to the third re-identification attacker 171_3 attempt speaker authentication of the anonymized speech data. The example of reference numeral 1920 also illustrates, as Comparative Examples, equal error rates obtained in use of "conventional anonymization processing" (in which the anonymized speech data generation program 1820 in FIG. 18 is replaced with conventional anonymization processing). The conventional anonymization processing is, for example, anonymization processing of randomly converting formants through signal processing of speech data, and is anonymization processing typically used in the broadcasting industry or the like.

According to the example of reference numeral 1920, when the conventional anonymization processing is used, the speaker authentication performed by the first re-identification attacker 171_1 and the speaker authentication performed by the second re-identification attacker 171_2 result in high equal error rates (low authentication accuracy). That is, the rates of the speakers being identified can be lowered. The speaker authentication performed by the third re-identification attacker 171_3 results in a low equal error rate (high authentication accuracy). That is, the rate of the speaker being identified is high.

As such, although, in the conventional anonymization processing, the speech is greatly changed in auditory sense, the conventional anonymization processing is weak against a re-identification attack of a high skill level and is processing in which the speaker is highly likely to be identified.

The equal error rates obtained in use of the present anonymization processing are all high (low authentication accuracy). The "equal error rates obtained in use of the present anonymization processing" refers to equal error rates obtained by performing speaker authentication on the anonymized speech data generated by executing the anonymized speech data generation program 1820 including the trained NN unit execution unit 1420.

That is, when the present anonymization processing is used, even if any re-identification attacker of the first re-identification attacker 171_1 to the third re-identification attacker 171_3 performs a re-identification attack, the rate of the speaker being identified can be lowered.

In this manner, the anonymized speech data generated by executing the anonymized speech data generation program 1820 including the trained NN unit execution unit 1420 has:
robustness against a re-identification attack performed by a re-identification attacker of any skill level; and
robustness stronger than the robustness against the re-identification attack of the speech data before the speaker anonymization processing, and stronger than the robustness against the re-identification attack of the anonymized speech data obtained in use of the conventional anonymization processing.

### (2) Verification of Convenience

Next, the convenience of the anonymized speech data generated by executing the anonymized speech data generation program is verified.

### (2-1) Method of Verification Experiment

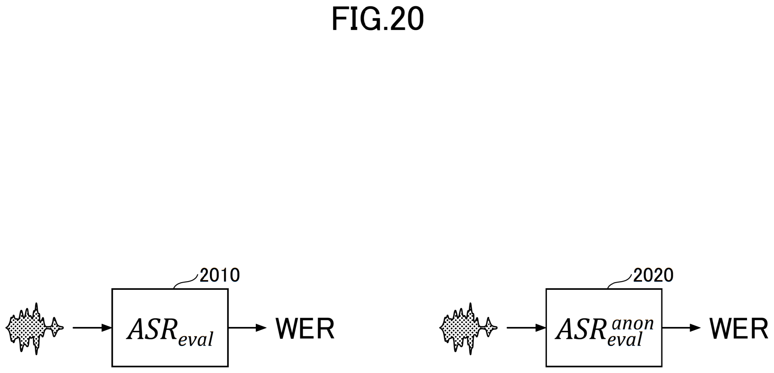

First, a method of a verification experiment will be described. FIG. 20 is a diagram illustrating the method of the verification experiment of the convenience of the anonymized speech data.

The example of FIG. 20 illustrates a case in which the anonymized speech data generation program 1820 including the trained NN unit execution unit 1420 is executed on speech data for verification, speech recognition is performed on the generated anonymized speech data, and an evaluator calculates an error rate for verification.

As illustrated in FIG. 20, two different systems (reference numerals 2010 and 2020) are used as an automatic speech recognition (ASR) system. Note that a first automatic speech recognition system denoted by reference numeral 2010 is a system that is trained using speech data for training (before the speaker anonymization processing) and a second automatic speech recognition system denoted by reference numeral 2020 is a system that is trained using anonymized speech data for training.

The anonymized speech data generated by executing the anonymized speech data generation program 1820 is:
input into the first automatic speech recognition system denoted by reference numeral 2010 for speech recognition, after which an evaluator calculates an error rate (WER: Word Error Rate) of the recognition result; and
input into the second automatic speech recognition system denoted by reference numeral 2020 for speech recognition, after which an evaluator calculates an error rate (WER: Word Error Rate) of the recognition result.

Thus, according to the method of the verification experiment illustrated in FIG. 20, it is possible to verify the convenience of the anonymized speech data generated by executing the anonymized speech data generation program 1820.

### (2-2) Results of Verification Experiment

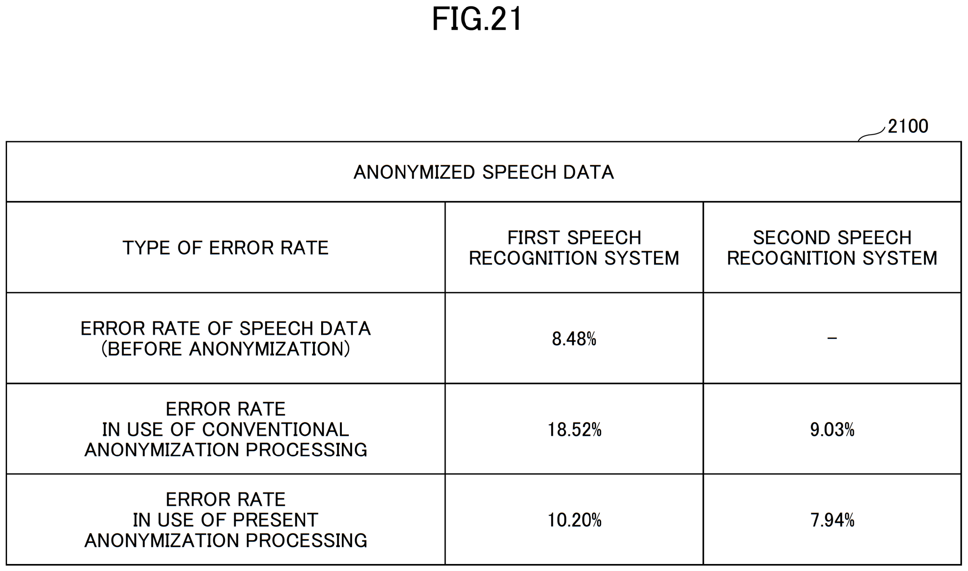

Next, the results of the verification experiment according to the method described in (2-1) above will be described. FIG. 21 is a table illustrating the results of the verification experiment of the convenience of the anonymized speech data.

In the results of the verification experiment illustrated in FIG. 21, error rates obtained when speech recognition is performed by inputting the speech data (before the speaker anonymization processing) into the first automatic speech recognition system are also illustrated as Reference Examples. Also, in the results of the verification experiment illustrated in FIG. 21, error rates obtained in use of conventional anonymization processing are illustrated as Comparative Examples. The "conventional anonymization processing" is, for example, anonymization processing of randomly converting formants through signal processing of speech data, and is anonymization processing typically used in the broadcasting industry or the like.

According to the example of reference numeral 2100, when the first speech recognition system is used, the error rate obtained in use of the conventional anonymization processing increases compared to the error rate of the speech data (before the speaker anonymization processing). The error rates obtained in use of the present anonymization processing are both substantially the same level as the level of the error rate of the speech data (before the speaker anonymization processing). The "error rates obtained in use of the present anonymization processing" refers to error rates obtained by performing speech recognition on the anonymized speech data generated by executing the anonymized speech data generation program 1820 including the trained NN unit execution unit 1420.

In this manner, the anonymized speech data generated by executing the anonymized speech data generation program 1820 including the trained NN unit execution unit 1420 can have substantially the same level of convenience as the level of convenience of the speech data (before the speaker anonymization processing).

### (3) Evaluation Results of Anonymized Speech Data

As described in the above (1-2) and (2-2), the anonymized speech data generated by executing the anonymized speech data generation program 1820 including the trained NN unit execution unit 1420 has:
substantially the same level of convenience as the level of convenience of the original speech data; and
robustness stronger than the robustness of the original speech data against a re-identification attack performed by a re-identification attacker of any skill level, and stronger than the robustness of the anonymized speech data obtained in use of the conventional anonymization processing.

That is, it is found that the anonymized speech data generated by executing the anonymized speech data generation program is an evaluation result that is plotted at a position directly above the original speech data and far away from the original speech data in the distribution graph of FIG. 17.

### <Conclusion>

As is clear from the above description, the speaker anonymization device (the server device 110, the terminal 130, or the terminal 150) configured to execute the speaker anonymization program according to the first embodiment is as follows.

The speaker anonymization device generates the anonymized speech data by performing the speaker anonymization processing on the speaker vector extracted through decomposition of the speech data, followed by recomposing.

The trained neural network configured to perform the Householder transformation (a neural network for achieving satisfaction of Condition 3) is stored. The trained neural network is trained such that the vector output by receiving an input of the speaker vector satisfies the predetermined loss function. Specifically, the trained neural network is trained based on the first loss function and the second loss function. The first loss function is a loss function that calculates a loss in accordance with the difference between the input speaker vector and the output anonymized speaker vector (a loss function for achieving satisfaction of Condition 1). The second loss function is a loss function that calculates a loss in accordance with the dissimilarity between the output anonymized speaker vector and a speaker vector other than the input speaker vector (a loss function for achieving satisfaction of Condition 2).

The speaker anonymization device generates the anonymized speaker vector by inputting the speaker vector to be anonymized into the trained neural network.

Thus, according to the server device 110 according to the first embodiment, it is possible to generate an anonymized speaker vector satisfying the following conditions.
(Condition 1) A speaker vector after the speaker anonymization processing is different from a speaker vector before the speaker anonymization processing.
(Condition 2) A speaker vector after the speaker anonymization processing is different from any other speaker vector included in the speech database and is also different from a speaker vector after the speaker anonymization processing of any other speaker vector included in the speech database.
(Condition 3) A distribution of speaker vectors after the speaker anonymization processing is not greatly different from a distribution with a population being all speaker vectors included in the speech database, i.e., speech recomposed based on a speaker vector after the speaker anonymization processing is human speech.

According to the first embodiment, it is found that the anonymized speech data recomposed using the anonymized speaker vector has the same level of convenience as the level of convenience of the speech data (before the speaker anonymization process) and that the robustness against the re-identification attack can be improved.

In this manner, according to the speaker anonymization device (the server device 110, the terminal 130, or the terminal 150) according to the first embodiment, it is possible to provide a speaker anonymization technology of improving robustness against re-identification attacks while maintaining convenience of speech data.

### [Other Embodiments]

The first embodiment has been described based on the case in which the training unit 401 performs training using, as the loss function calculation unit 503, two calculation units, i.e., the first loss function calculation unit 511 and the second loss function calculation unit 512. However, the training unit 401 may be configured to perform training using, as the loss function calculation unit 503, the first loss function calculation unit 511 or the second loss function calculation unit 512. Alternatively, the training unit 401 may be configured to perform training using, as the loss function calculation unit 503, a calculation unit based on a predetermined loss function other than the first loss function calculation unit 511 and the second loss function calculation unit 512.

Also, the first embodiment has been described based on the case in which the anonymized speech data generation unit 1400 employs the trained neural network configured to perform Householder transformation. However, the anonymized speech data generation unit 1400 may employ a trained neural network other than the trained neural network configured to perform Householder transformation, as long as the trained neural network can achieve satisfaction of Condition 3. However, when employing a trained neural network other than the trained neural network configured to perform Householder transformation, desirably, the trained neural network is previously trained using the first loss function calculation unit 511 or the second loss function calculation unit 512.

Also, the first embodiment has been described based on the case in which the decomposition unit 1410 of the anonymized speech data generation unit 1400 includes the pitch acquisition unit 1411. However, the pitch acquisition unit 1411 is not essential, and it is acceptable for the decomposition unit 1410 of the anonymized speech data generation unit 1400 not to include the pitch acquisition unit 1411.

In the first embodiment, the example of using "Cosine similarity loss" as the first loss function calculation unit 511 has been described. However, any other loss function may be used as the first loss function calculation unit 511, as long as the loss function can achieve satisfaction of Condition 1.

In the first embodiment, the example of using, as the second loss function calculation unit 512,
"Cross-entropy loss",
"AAM (Additive Angular Margin softmax) loss",
"w-AAM (Weighted Additive Angular Margin softmax) loss",
or the like, has been described. However, any other loss function may be used as the second loss function calculation unit 512, as long as the loss function can achieve satisfaction of Condition 2.

The first embodiment has been described based on the case in which the speaker anonymization processing is performed on the speaker vector extracted from the speech data. However, a target to be subjected to the anonymization processing is not limited to the speaker vector extracted from the speech data. For example, the anonymization processing may be performed on a face recognition vector extracted from image data.

The first embodiment has a configuration that the server device 110 executes the training program to generate the trained NN unit. However, what executes the training program is not limited to the server device 110, and a device (not shown) possessed by a user who uses the anonymized speech data generation program may execute the training program. In this case, the server device 110 may be configured to provide the training program and the anonymized speech data generation program including the untrained NN unit to the user who uses the anonymized speech data generation program.

Also, the first embodiment has been described based on the case in which the server device 110 is implemented as an integrated device. However, each functional unit included in the server device 110 may be implemented as a separate device. For example, the training unit 401 may be implemented as a training device separate from the server device 110. Also, the generation unit 402 may be implemented as a generation device separate from the server device 110.

In the first embodiment, the type of language of the speech data is not mentioned, but the type of the language of the speech data is as desired.

The present invention is not limited to the configurations described herein. For example, other elements can be combined with the configurations and the like described in the above embodiments. In this regard, it is possible to make any modifications without departing from the intent of the present invention, and appropriately define them in accordance with application modes.

The present application claims priority to Japanese Patent Application No. 2023-088164, filed on May 29, 2023, and the entire content of this Japanese patent application is incorporated herein by reference.

### REFERENCE SIGNS LIST

- 100: : Network system
- 110: : Server device
- 130: : Terminal
- 140: : Server device
- 150: : Terminal
- 401: : Training unit
- 402: : Generation unit
- 403: : Providing unit
- 501: : Speaker vector extraction unit
- 502: : NN unit
- 503: : Loss function calculation unit
- 511: : First loss function calculation unit
- 512: : Second loss function calculation unit
- 1001: : Decomposition program insertion unit
- 1002: : Trained NN unit acquisition unit
- 1003: : Recomposition program insertion unit
- 1004: : Anonymized speech data generation program construction unit
- 1011: : Request acquisition unit
- 1012: : Program execution unit
- 1013: : Transmission unit
- 1400: : Anonymized speech data generation unit
- 1410: : Decomposition unit
- 1411: : Pitch acquisition unit
- 1412: : Utterance content acquisition unit
- 1413: : Speaker vector extraction unit
- 1420: : Trained NN unit execution unit
- 1430: : Recomposition unit

## Claims

1. A speaker anonymization device configured to generate anonymized speech data, the speaker anonymization device comprising:
a generation unit configured to generate a speaker-anonymized vector by inputting a speaker vector extracted from speech data to be anonymized into a trained neural network configured to perform Householder transformation and trained using a predetermined loss function.

2. The speaker anonymization device according to claim 1, wherein
the predetermined loss function includes a first loss function that calculates a loss in accordance with a difference between a speaker vector extracted from speech data to be used for training, and a speaker-anonymized vector output by inputting the speaker vector into a neural network configured to perform the Householder transformation.

3. The speaker anonymization device according to claim 2, wherein
the predetermined loss function includes a second loss function that calculates a loss in accordance with dissimilarity, with respect to another vector, of a speaker-anonymized vector output by inputting the speaker vector extracted from the speech data to be used for training into the neural network configured to perform the Householder transformation.

4. A speaker anonymization device configured to generate anonymized speech data, the speaker anonymization device comprising:
a generation unit configured to generate a speaker-anonymized vector by inputting a speaker vector extracted from speech data to be anonymized into a trained neural network that is generated through training of a neural network using a first loss function and/or a second loss function, wherein
the first loss function calculates a loss in accordance with a difference between a speaker vector extracted from speech data to be used for training, and a speaker-anonymized vector output from the neural network by inputting the speaker vector into the neural network, and
the second loss function calculates a loss in accordance with dissimilarity, with respect to another vector, of the output speaker-anonymized vector.

5. The speaker anonymization device according to claim 4, wherein
the neural network is configured to perform Householder transformation on the speaker vector extracted from the speech data to be used for training.

6. The speaker anonymization device according to claim 3 or 5, wherein
the dissimilarity with respect to the another vector includes
dissimilarity between the speaker-anonymized vector output by inputting the speaker vector extracted from the speech data to be used for training into the neural network configured to perform the Householder transformation, and a speaker vector other than the speaker vector, and
dissimilarity between the speaker-anonymized vector output by inputting the speaker vector extracted from the speech data to be used for training into the neural network configured to perform the Householder transformation, and another speaker-anonymized vector output by inputting another speaker vector extracted from the speech data to be used for training into the neural network configured to perform the Householder transformation.

7. The speaker anonymization device according to claim 1 or 5, wherein
the trained neural network configured to perform the Householder transformation includes at least one of:
a trained neural network that is trained with a parameter being initialized to be a fixed value; or
a trained neural network that is trained with a parameter being initialized randomly.

8. The speaker anonymization device according to claim 1 or 4, further comprising:
an utterance content acquisition unit configured to acquire utterance content from the speech data to be anonymized; and
a recomposition unit configured to recompose the acquired utterance content and the generated speaker-anonymized vector, thereby generating the anonymized speech data.

9. The speaker anonymization device according to claim 8, further comprising:
a pitch acquisition unit configured to acquire a pitch from the speech data to be anonymized, wherein
the recomposition unit is configured to recompose the acquired pitch, the acquired utterance content, and the generated speaker-anonymized vector, thereby generating the anonymized speech data.

10. The speaker anonymization device according to claim 8, further comprising:
a transmission unit configured to transmit, to a requester, the anonymized speech data that is generated from the speech data to be anonymized included in a request acquired via a network.

11. A speaker anonymization method for generating anonymized speech data, the speaker anonymization method comprising:
causing a computer to execute a generation process of generating a speaker-anonymized vector by inputting a speaker vector extracted from speech data to be anonymized into a trained neural network configured to perform Householder transformation and trained using a predetermined loss function.

12. A speaker anonymization method for generating anonymized speech data, the speaker anonymization method comprising:
causing a computer to execute a generation process of generating a speaker-anonymized vector by inputting a speaker vector extracted from speech data to be anonymized into a trained neural network that is generated through training of a neural network using a first loss function and/or a second loss function, wherein
the first loss function calculates a loss in accordance with a difference between a speaker vector extracted from speech data to be used for training, and a speaker-anonymized vector output from the neural network by inputting the speaker vector into the neural network, and
the second loss function calculates a loss in accordance with dissimilarity, with respect to another vector, of the output speaker-anonymized vector.

13. A speaker anonymization program causing a computer of a speaker anonymization device configured to generate anonymized speech data to execute:
a generation process of generating a speaker-anonymized vector by inputting a speaker vector extracted from speech data to be anonymized into a trained neural network configured to perform Householder transformation and trained using a predetermined loss function.

14. A speaker anonymization program causing a computer of a speaker anonymization device configured to generate anonymized speech data to execute:
a generation process of generating a speaker-anonymized vector by inputting a speaker vector extracted from speech data to be anonymized into a trained neural network that is generated through training of a neural network using a first loss function and/or a second loss function, wherein
the first loss function calculates a loss in accordance with a difference between a speaker vector extracted from speech data to be used for training, and a speaker-anonymized vector output from the neural network by inputting the speaker vector into the neural network, and
the second loss function calculates a loss in accordance with dissimilarity, with respect to another vector, of the output speaker-anonymized vector.

15. A training device, comprising:
a training unit configured to generate a trained neural network by training a neural network configured to perform Householder transformation using a first loss function and a second loss function, wherein
the first loss function calculates a loss in accordance with a difference between a speaker vector extracted from speech data to be used for training, and a vector output from the neural network by inputting the speaker vector into the neural network, and
the second loss function calculates a loss in accordance with dissimilarity, with respect to another vector, of the output vector.

16. A training method executed by a computer, the training method comprising:
a training process of generating a trained neural network by training a neural network configured to perform Householder transformation using a first loss function and a second loss function, wherein
the first loss function calculates a loss in accordance with a difference between a speaker vector extracted from speech data to be used for training, and a vector output from the neural network by inputting the speaker vector into the neural network, and
the second loss function calculates a loss in accordance with dissimilarity, with respect to another vector, of the output vector.

17. A training program causing a computer to execute:
a training process of generating a trained neural network by training a neural network configured to perform Householder transformation using a first loss function and a second loss function, wherein
the first loss function calculates a loss in accordance with a difference between a speaker vector extracted from speech data to be used for training, and a vector output from the neural network by inputting the speaker vector into the neural network, and
the second loss function calculates a loss in accordance with dissimilarity, with respect to another vector, of the output vector.
